# EUROPEAN PATENT APPLICATION

(11) **EP 3 219 685 A1**
(43) Date of publication of application: **20.09.2017**
(21) Application number: 15858800.4
(22) Date of filing: 10.11.2015
(51) Int. Cl.: C03C 27/12, B32B 25/08, E06B 3/66

(54) **INTERLAYER FOR LAMINATED GLASS AND LAMINATED GLASS**

(30) Priority: 10.11.2014 JP 2014228354; 05.12.2014 JP 2014246710
(71) Applicant: KURARAY CO., LTD., Kurashiki-shi, Okayama 710-0801 (JP)
(72) Inventor: KOBAYASHI, Takuya, Kurashiki-shi Okayama 713-8550 (JP); KUSUDOU, Takeshi, Kurashiki-shi Okayama 713-8550 (JP); YUI, Taiga, Kurashiki-shi Okayama 713-8550 (JP); ISOUE, Koichiro, Kurashiki-shi Okayama 713-8550 (JP)
(74) Representative: Müller-Boré & Partner Patentanwälte PartG mbB
(86) International application number: PCT/JP2015/081668
(87) International publication number: WO 2016/076340

(57) **Abstract**

An object of the present invention is to provide an interlayer film for laminated glass which has excellent sound insulating properties and which even when used for a long period of time in a high-temperature and high-humidity environment, is able to keep a haze good and is also able to suppress whitening from an edge side thereof.

The present invention is concerned with an interlayer film for laminated glass including a sound insulating layer (layer A) and thermoplastic resin layers containing a thermoplastic resin (layers B), the sound insulating layer (layer A) being located between at least two of the thermoplastic resin layers (layers B), wherein with respect to a laminated glass obtained by interposing the interlayer film for laminated glass by two sheets of float glass and a laminated glass obtained by holding the laminated glass under conditions at 80°C and at a relative humidity of 95% for 1,000 hours, when a haze of a central portion of the laminated glass in accordance with JIS K 7105 is measured, an increase of the haze of the laminated glass after holding relative to the haze of the laminated glass before holding is 2% or less, and a distance of whitening from an edge side of the laminated glass after holding is 4 mm or less.

## Description

### TECHNICAL FIELD

The present invention relates to an interlayer film for laminated glass and a laminated glass, each of which has excellent sound insulating properties and which even when used in a high-temperature and high-humidity environment for a long period of time, is able to keep a haze good and is also able to suppress whitening from an edge side thereof. In addition, the present invention relates to an interlayer film for laminated glass and a laminated glass, each of which has excellent sound insulating properties and which even when used for a long period of time under sunlight, is able to suppress yellowing of an edge portion thereof.

### BACKGROUND ART

Polyvinyl acetal resins represented by polyvinyl butyral are excellent in adhesion to or compatibility with various organic or inorganic base materials and solubility in organic solvents, and they are widely utilized as various adhesives or binders for ceramic, various inks, paints, and the like as well as safety glass interlayer films.

Among those, films containing a polyvinyl acetal resin and a plasticizer are widely utilized as an interlayer film for laminated glass because they are excellent in adhesion to a glass and transparency and also in mechanical strength and flexibility (the interlayer film for laminated glass will be hereinafter also referred to simply as "interlayer film").

Now, it is known that though glass plates which are used for a windowpane and the like are excellent in durability and daylighting properties, a damping performance (tan δ against bending vibration) is very small. For this reason, a lowering of sound insulating properties to be caused due to a resonance state occurred by vibration of a glass and incident sonic wave, namely a coincident effect is remarkable.

In the case of constructing a glass in a place for which sound insulation is required, such as a window, etc., there have hitherto been employed a method of making the thickness of glass thick to enhance a sound insulating effect by weight, and a method of using a laminated glass prepared by laminating two or more sheets of glass plate and an interlayer film to enhance a sound insulating effect. In the latter method of using an interlayer film, the sound insulating properties of the laminated glass are improved by a damping performance of the interlayer film and a performance of the interlayer film of converting vibration energy into heat energy.

As for a method of improving sound insulating properties, there is, for example, proposed an interlayer film in which a copolymer of polystyrene and a rubber-based resin is laminated by a plasticized polyvinyl acetal-based resin (see, for example, Patent Literature 1).

In addition, there are proposed an interlayer film for laminated glass and a laminated glass composed of polyvinyl butyral and having certain impact resistance and sound insulating properties (see, for example, Patent Literature 2).

Meanwhile, as an interlayer film with improved sound insulating properties, there are proposed an interlayer film composed of a three-layer constitution of ionomer/EVA/ionomer (see, for example, Patent Literature 3), an interlayer film composed of a three-layer constitution of ionomer/ethylene acid copolymer/ionomer (see, for example, Patent Literature 4), and the like.

In addition, in order to not only suppress the generation of acetic acid or yellowing but also suppress a lowering of transparency or adhesive force in a moist heat environment, it is proposed to use an ethylene · vinyl acetate copolymer sheet containing a repeating unit of a monomer derived from glycidyl (meth)acrylate as an interlayer film for laminated glass (see, for example, Patent Literature 5). In addition, in order to not only reveal excellent transparency and mechanical strength but also not impair an initial optical quality even after a durability test, there is also proposed an interlayer film for laminated glass in which when irradiated with ultraviolet rays at an intensity of 100 mW/cm² and at a wavelength of 295 to 450 nm for 300 hours, a lowering of transmittance of visible light of the laminated glass after irradiation with ultraviolet rays is 1.0% or less (see, for example, Patent Literature 6). In addition to the above, in order to regulate the transmittance of ultraviolet rays at a wavelength of 400 nm to 1% or less, thereby improving light fastness, there is also proposed an interlayer film for laminated glass containing a specified amount of each of two kinds of ultraviolet absorbers having a specified structure (see, for example, Patent Literature 7). Furthermore, in order to improve transparency, heat insulating properties, electromagnetic wave permeability, and weather resistance, there is also proposed an interlayer film for laminated glass in which when formed into a laminated glass, an electromagnetic shielding performance at frequencies at 0.1 to 10 MHz and 2 to 26.5 GHz is 10 dB or less, a haze is 1.0% or less, a transmittance of visible light is 70% or more, and a transmittance of solar radiation in a wavelength region of 300 nm to 2, 100 nm is 85% or less of the transmittance of visible light (see, for example, Patent Literature 8).

### CITATION LIST

### PATENT LITERATURE

Patent Literature 1: JP 2007-91491A
Patent Literature 2: WO 2005/018969A
Patent Literature 3: WO 2015/013242A
Patent Literature 4: WO 2015/085165A
Patent Literature 5: JP 2014-015544A
Patent Literature 6: JP 2003-327455A
Patent Literature 7: WO 2012/023616A
Patent Literature 8: WO 2003/018502A

### SUMMARY OF INVENTION

### TECHNICAL PROBLEM

However, in the above-described conventional interlayer films, there was a concern that when the use environment of the laminated glass is a high-temperature and high-humidity environment, discoloration of the interlayer film in a stripped portion is generated, or when the laminated glass is used in a high-temperature and high-humidity environment for a long period of time, the sound insulating properties of the laminated glass are lowered. Alternatively, there was involved such a problem that though whitening of the periphery is improved, the sound insulating properties are not sufficient.

In the light of the above, in the conventional interlayer films, it was difficult to not only exhibit high sound insulating properties but also make both properties of keeping the haze good and properties of suppressing whitening from the edge side compatible with each other in a high-temperature and high-humidity environment.

In addition, in the case where the above-described interlayer films for laminated glass are used for a laminated glass in which the edge portion of the laminated glass is stripped without being sealed with a resin or rubber, as in laminated glasses for building or side laminated glasses for automobile, there was a concern that when used under sunlight, the interlayer film in a stripped portion is yellowed. In addition, in the above-described interlayer films for laminated glass, there was also involved such a problem that the sound insulating properties are not sufficient.

In the light of the above, in the conventional interlayer films, both properties that the edge portion of the stripped part is hardly yellowed under sunlight and properties that the sound insulating properties are high could not be made compatible with each other.

The present invention is to solve the above-described problems. Specifically, a first object of the present invention is to provide an interlayer film for laminated glass which when used as an interlayer film for laminated glass, has excellent sound insulating properties and which even when used in a high-temperature and high-humidity environment for a long period of time, is able to keep a haze good and is also able to suppress whitening from an edge side thereof.

In addition, a second object of the present invention is to provide an interlayer film for laminated glass which when used as an interlayer film for laminated glass, has excellent sound insulating properties and which even when used for a long period of time under sunlight, is able to suppress yellowing of an edge portion thereof.

### SOLUTION TO PROBLEM

The objects of the present invention are achieved by providing the following.
[1] An interlayer film for laminated glass comprising a sound insulating layer (layer A) and thermoplastic resin layers containing a thermoplastic resin (layers B), the sound insulating layer (layer A) being located between at least two of the thermoplastic resin layers (layers B), wherein
   with respect to a laminated glass obtained by interposing the interlayer film for laminated glass by two sheets of float glass and a laminated glass obtained by holding the laminated glass under conditions at 80°C and at a relative humidity of 95% for 1,000 hours, when a haze of a central portion of the laminated glass in accordance with JIS K 7105 is measured, an increase of the haze of the laminated glass after holding relative to the haze of the laminated glass before holding is 2% or less, and a distance of whitening from an edge side of the laminated glass after holding is 4 mm or less;
[2] The interlayer film for laminated glass as set forth in [1], wherein with respect to a laminated glass obtained by interposing the interlayer film for laminated glass by two sheets of float glass and a laminated glass obtained by holding the laminated glass under conditions at 80°C and at a relative humidity of 95% for 1,000 hours, when a loss factor at a tertiary resonance frequency is measured at 20°C by a central exciting method, the loss factor of the laminated glass before holding is 0.2 or more, and a decrease of the loss factor of the laminated glass after holding relative to the loss factor of the laminated glass before holding is 0.05 or less;
[3] The interlayer film for laminated glass as set forth in [1] or [2], wherein
   with respect to a laminated glass obtained by interposing the interlayer film for laminated glass by two sheets of float glass,
   in a state where the laminated glass is placed such that in a positional relation in which a plane of the laminated glass including the center in a longitudinal direction thereof includes the center in a width direction of a cylindrical xenon lamp, and a plane of the laminated glass including the center in a thickness direction thereof includes the center in a length direction of the cylindrical xenon lamp, its shortest distance to the cylindrical xenon lamp is 29 cm,
   when the laminated glass is held for 1,000 hours while irradiating an edge portion thereof with ultraviolet rays at a luminance of the xenon lamp of 180 W/m² under conditions at a relative humidity of 50% and a black panel temperature of 63°C,
   in measuring a YI (yellow index) of the laminated glass before holding and a YI of the laminated glass after holding on the basis of JIS K 7373, an increase of the YI of the laminated glass after holding relative to the YI of the laminated glass before holding is 3 or less;
[4] The interlayer film for laminated glass as set forth in any of [1] to [3], wherein with respect to a laminated glass having the interlayer film for laminated glass interposed by two sheets of float glass, a loss factor at a tertiary resonance frequency as measured at 20°C by a central exciting method is 0.2 or more;
[5] The interlayer film for laminated glass as set forth in any of [1] to [4], wherein the sound insulating layer (layer A) is a layer containing a thermoplastic elastomer;
[6] The interlayer film for laminated glass as set forth in [5], wherein the thermoplastic elastomer is a block copolymer;
[7] The interlayer film for laminated glass as set forth in [6], wherein the block copolymer has an aromatic vinyl polymer block and an aliphatic unsaturated hydrocarbon polymer block;
[8] The interlayer film for laminated glass as set forth in any of [5] to [7], wherein
   the thermoplastic elastomer is a hydrogenated product of a block copolymer having an aromatic vinyl polymer block containing 60 mol% or more of an aromatic vinyl monomer unit and an aliphatic unsaturated hydrocarbon polymer block containing 60 mol% or more of a conjugated diene monomer unit,
   the aliphatic unsaturated hydrocarbon polymer block has an isoprene unit and a butadiene unit in an amount of 50 mol% or more in total as the conjugated diene monomer unit, and
   a residual amount of a carbon-to-carbon double bond derived from the conjugated diene monomer unit is 2 to 40 mol%;
[9] The interlayer film for laminated glass as set forth in any of [1] to [8], wherein the thermoplastic resin is a polyvinyl acetal resin or an ionomer resin;
[10] The interlayer film for laminated glass as set forth in [9], wherein a content of a plasticizer is 50 parts by mass or less based on 100 parts by mass of the polyvinyl acetal resin;
[11] The interlayer film for laminated glass as set forth in any of [1] to [10], wherein when preparing a laminated glass by interposing the interlayer film for laminated glass by two sheets of float glass, a transmittance of a near infrared light having a wavelength of 1,500 nm is 50% or less;
[12] The interlayer film for laminated glass as set forth in any of [1] to [11], wherein at least one of the sound insulating layer (layer A) and the thermoplastic resin layers (layers B) contains a heat insulating material;
[13] The interlayer film for laminated glass as set forth in any of [1] to [12], wherein one or more members selected from the group consisting of tin-doped indium oxide, antimony-doped tin oxide, aluminum-doped zinc oxide, zinc antimonate, lanthanum hexaboride, a metal-doped tungsten oxide, a phthalocyanine compound, and a naphthalocyanine compound are contained as the heat insulating material; and
[14] A laminated glass comprising the interlayer film for laminated glass as set forth in any of [1] to [13] disposed between at least two sheets of glass.

### ADVANTAGEOUS EFFECTS OF INVENTION

According to the present invention, as a first effect, it is possible to provide an interlayer film for laminated glass and a laminated glass, each of which has excellent sound insulating properties and which even when used in a high-temperature and high-humidity environment for a long period of time, is able to keep a haze good and is also able to suppress whitening from an edge side thereof.

In addition, according to the present invention, as a second effect, it is possible to provide an interlayer film for laminated glass and a laminated glass, each of which has excellent sound insulating properties and which even when used for a long period of time under sunlight, is able to suppress yellowing of an edge portion thereof.

### BRIEF DESCRIPTION OF DRAWINGS

FIG. 1 is an example of a cross-sectional view of a constitution of an interlayer film for laminated glass of the present invention.
FIG. 2 is a schematic view exhibiting a positional relation between a laminated glass and a xenon lamp in a weather resistance test.
FIG. 3 is an example of a schematic view of a laminated glass to be used for evaluation of thermal creep resistance.
FIG. 4 is an example of a schematic view in the case of sticking an iron plate onto a laminated glass to be used for evaluation of thermal creep resistance.
FIG. 5 is an example of a schematic view in the case of leaning a laminated glass having an iron plate stuck thereonto against a stand for the purpose of evaluation of thermal creep resistance.

### DESCRIPTION OF EMBODIMENTS

Embodiments of the present invention are hereunder described, but it should not be construed that the present invention is limited to the present embodiments.

### [Layer A]

The interlayer film for laminated glass of the present invention is constituted of at least a layer A and a plurality of layers B, and it is an interlayer film for laminated glass having a sound insulating layer (layer A) and thermoplastic resin layers (layers B) containing a thermoplastic resin, the sound insulating layer (layer A) being located between the at least two layers B.

A response of stress when distortion of a sinusoidal waveform is applied to a viscoelastic body is defined as a complex modulus. At this time, a phase shift is generated between the sinusoidal wave of distortion to be applied and the sinusoidal wave of stress obtained as the response, and this phase difference is expressed in terms of δ. In addition, the complex modulus is expressed in terms of an equality using a complex number, and a real part of the complex modulus is called a storage modulus, whereas an imaginary part thereof is called a loss modulus. In particular, in the case of measuring dynamic viscoelastic characteristics of a viscoelastic body in a shear mode, they are called a complex shear modulus, a shear storage modulus, and a shear loss modulus, respectively. A value obtained by dividing the loss modulus by the storage modulus is called a loss tangent and expressed in terms of tan δ.

From the viewpoint of improving the sound insulating properties, the layer A which is used in the present invention has a peak (temperature at a peak top) at which a tan δ as measured by conducting a complex shear viscosity test under a condition at a frequency of 1 Hz in accordance with JIS K 7244-10 is maximum preferably at -40°C or higher, more preferably at -30°C or higher, and still more preferably at -20°C or higher. In addition, the layer A has a peak at which the tan δ is maximum preferably at 30°C or lower, more preferably at 10°C or lower, and still more preferably at 0°C or lower. When the peak at which the tan δ is maximum is present at 30°C or lower, the sound insulating properties tend to be exhibited in a temperature region where the layer A is used as a laminated glass. When the peak at which the tan δ is maximum is present at -40°C or higher, the sound insulating properties in a high-frequency region tend to be improved. Specifically, the above-described tan δ is measured by the method described in the Examples as described later.

In addition, in the layer A, a height of at least one peak of tan δ as measured by conducting a complex shear viscosity test under a condition at a frequency of 1 Hz in accordance with JIS K 7244-10 is preferably 0.5 or more, more preferably 0.75 or more, and still more preferably 0.8 or more. In addition, from the viewpoint of more improving the sound insulating properties, the height of the peak at which the tan δ is maximum is preferably 1.0 or more, more preferably 1.3 or more, and still more preferably 1. 5 or more. When the height of the peak of tan δ under the above-described condition is less than 0.5, the sound insulating properties of the resulting interlayer film for laminated glass tend to become low.

From the viewpoint of improving the sound insulating properties, the sound insulating layer constituting the layer A is preferably a layer containing a thermoplastic elastomer.

The thermoplastic elastomer to be contained in the layer A which is used in the present invention has a peak at which a tan δ as measured by conducting a complex shear viscosity test under a condition at a frequency of 1 Hz in accordance with JIS K 7244-10 is maximum preferably at -40°C or higher, more preferably at -30°C or higher, and still more preferably at -20°C or higher. In addition, the thermoplastic elastomer has a peak at which the tan δ is maximum preferably at 30°C or lower, more preferably at 10°C or lower, and still more preferably at 0°C or lower. When the peak at which the tan δ is maximum is present at higher than 30°C, the sound insulating properties tend to be hardly exhibited in a temperature region where the layer A is used as a laminated glass. When the peak at which the tan δ is maximum is present at lower than -40°C, there is a tendency that the shear storage modulus is lowered, and the sound insulating properties in a high-frequency region are lowered. Specifically, the above-described tan δ is measured by the method described in the Examples as described later. As a method of adjusting the peak temperature at which the tan δ is maximum to -40 to 30°C, there is, for example, exemplified a method of using a suitable thermoplastic elastomer, especially a block copolymer as described later, or the like.

From the viewpoint of much more improving the sound insulating properties, the glass transition temperature of the thermoplastic elastomer is preferably 10°C or lower, and more preferably -5°C or lower. A lower limit of the glass transition temperature of the thermoplastic elastomer is not particularly limited, and the glass transition temperature of the thermoplastic elastomer is preferably -50°C or higher, and more preferably -40°C or higher. Differential scanning calorimetry (DSC) may be adopted for the measurement method of glass transition temperature.

In the thermoplastic elastomer, the height of at least one peak of tan δ as measured by conducting a complex shear viscosity test under a condition at a frequency of 1 Hz in accordance with JIS K 7244-10 is preferably 0.5 or more, more preferably 0.75 or more, and still more preferably 0.8 or more. In addition, from the viewpoint of more improving the sound insulating properties, the height of the peak at which the tan δ is maximum is preferably 1.0 or more, more preferably 1.3 or more, and still more preferably 1. 5 or more. When the height of the peak of tan δ under the above-described condition is less than 0.5, the sound insulating properties of the resulting interlayer film for laminated glass tend to become low. As a method of adjusting the height of the peak of tan δ to 0.5 or more, there is, for example, exemplified a method of using a suitable thermoplastic elastomer, especially a block copolymer as described later, or the like.

### (Thermoplastic elastomer)

The thermoplastic elastomer as referred to in the present specification means a polymer compound which when heated, is softened to exhibit plasticity, whereas when cooled, is solidified to exhibit rubber elasticity, and is distinguished from a thermoplastic resin. In addition, the thermoplastic elastomer refers to a polymer compound having a hard segment and a soft segment. In view of the fact that the layer A serving as an internal layer contains the thermoplastic elastomer, the sound insulating properties are improved. Furthermore, when a hydrophobic polymer compound with low polarity, such as a thermoplastic elastomer, is used as an internal layer of the interlayer film for laminated glass, water, such as moisture, etc., hardly penetrates from the edge side of the laminated glass into the inside of the interlayer film for laminated glass. For that reason, the edge side of the laminated glass is hardly whitened even in a moist heat environment.

From the viewpoint of making both the moldability and the sound insulating properties compatible with each other, examples of the thermoplastic elastomer include thermoplastic elastomers, such as a polystyrene-based elastomer (soft segment: polybutadiene, polyisoprene, etc./hard segment: polystyrene), a polyolefin-based elastomer (soft segment: ethylene propylene rubber/hard segment: polypropylene), a polyvinyl chloride-based elastomer (soft segment: polyvinyl chloride/hard segment: polyvinyl chloride), a polyurethane-based elastomer (soft segment: polyether or polyester/hard segment: polyurethane), a polyester-based elastomer (soft segment: polyether/hard segment: polyester), a polyamide-based elastomer (soft segment: polypropylene glycol, polytetramethylene ether glycol, polyester, or polyether/hard segment: polyamide <nylon resin>), a polybutadiene-based elastomer (soft segment: amorphous butyl rubber/hard segment: syndiotactic 1,2-polybutadiene resin), an acrylic elastomer (soft segment: polyacrylate ester/hard segment: polymethyl methacrylate), etc. These thermoplastic elastomers may be used solely or may be used in combination of two or more thereof.

A content of the hard segment in the thermoplastic elastomer is preferably 5% by mass or more, more preferably 7% by mass or more, still more preferably 10% by mass or more, yet still more preferably 14% by mass or more, even yet still more preferably 15% by mass or more, and most preferably 17% by mass or more relative to the total amount of the thermoplastic elastomer. A content of the hard segment is preferably 40% by mass or less, more preferably 30% by mass or less, still more preferably 25% by mass or less, and especially preferably 20% by mass or less relative to the total amount of the thermoplastic elastomer. When the content of the hard segment is less than 5% by mass, there is a tendency that the molding of the layer A is difficult, or the height of the peak of tan δ is small. In addition, there is a tendency that the bending rigidity of the interlayer film for laminated glass is small, so that the sound insulating properties in a high-frequency region is lowered. When the content of the hard segment is more than 40% by mass, there is a tendency that the edge portion of the interlayer film for laminated glass is liable to be yellowed, or the characteristics as the thermoplastic elastomer are hardly exhibited.

A content of the soft segment in the thermoplastic elastomer is preferably 60% by mass or more, more preferably 70% by mass or more, still more preferably 75% by mass or more, and yet still more preferably 80% by mass or more relative to the total amount of the thermoplastic elastomer. The content of the soft segment is preferably 95% by mass or less, more preferably 93% by mass or less, still more preferably 90% by mass or less, yet still more preferably 86% by mass or less, even yet still more preferably 85% by mass or less, and most preferably 83% by mass or less relative to the total amount of the thermoplastic elastomer. When the content of the soft segment is less than 60% by mass, the characteristics as the thermoplastic elastomer tend to be hardly exhibited. When the content of the soft segment is more than 95% by mass, there is a tendency that the molding of the layer A is difficult, or the height of the peak of tan δ is small. In addition, there is a tendency that the bending rigidity of the interlayer film for laminated glass is small, so that the sound insulating properties in a high-frequency region are lowered.

From the viewpoint of making both the moldability and the sound insulating properties compatible with each other, it is more preferred to use a block copolymer having a hard segment and a soft segment as the thermoplastic elastomer. Furthermore, from the viewpoint of more improving the sound insulating properties, it is preferred to use a polystyrene-based elastomer.

In addition, rubbers, such as natural rubber, isoprene rubber, butadiene rubber, chloroprene rubber, nitrile rubber, butyl rubber, ethylene propylene rubber, urethane rubber, silicone rubber, chlorosulfonated polyethylene rubber, acrylic rubber, fluorine rubber, and the like may be used as the thermoplastic elastomer.

From the viewpoint of making both the function as a rubber exhibiting sound insulating properties and the function as a plastic compatible with each other, the thermoplastic elastomer is preferably a block copolymer having an aromatic vinyl polymer block (hereinafter also referred to as "polymer block (a)") and an aliphatic unsaturated hydrocarbon polymer block (hereinafter also referred to as "polymer block (b)"), for example, a polystyrene-based elastomer.

In the case where a copolymer having an aromatic vinyl polymer block and a vinyl polymer block or a conjugated diene polymer block, for example, a block copolymer having an aromatic vinyl polymer block and an aliphatic unsaturated hydrocarbon polymer block is used as the thermoplastic elastomer, the binding form of these polymer blocks is not particularly limited, and it may be any of a linear binding form, a branched binding form, a radial binding form, and a combined binding form of two or more thereof. Of those, a linear binding form is preferred.

When the aromatic vinyl polymer block is expressed as "a", and the aliphatic unsaturated hydrocarbon polymer block is expressed as "b", examples of the linear binding form include a diblock copolymer expressed by a-b, a triblock copolymer expressed by a-b-a or b-a-b, a tetrablock copolymer expressed by a-b-a-b, a pentablock copolymer expressed by a-b-a-b-a or b-a-b-a-b, an (a-b)ₙX type copolymer (X represents a coupling residual group, and n represents an integer of 2 or more), and a mixture thereof. Of those, a diblock copolymer or a triblock copolymer is preferred, and the triblock copolymer is more preferably a triblock copolymer expressed by a-b-a.

A sum total of an aromatic vinyl monomer unit and an aliphatic unsaturated hydrocarbon monomer unit in the block copolymer is preferably 80% by mass or more, more preferably 95% by mass or more, and still more preferably 98% by mass or more relative to the whole of the monomer units. It is to be noted that a part or the whole of the aliphatic unsaturated hydrocarbon polymer blocks in the block copolymer may be hydrogenated.

A content of the aromatic vinyl monomer unit in the block copolymer is preferably 5% by mass or more, more preferably 7% by mass or more, still more preferably 10% by mass or more, yet still more preferably 14% by mass or more, especially preferably 15% by mass or more, and most preferably 17% by mass or more relative to the whole of the monomer units of the block copolymer. A content of the aromatic vinyl monomer unit is preferably 40% by mass or less, more preferably 30% by mass or less, still more preferably 25% by mass or less, and especially preferably 20% by mass or less relative to the whole of the monomer units of the block copolymer. When the content of the aromatic vinyl monomer unit in the block copolymer is less than 5% by mass, there is a tendency that the molding of the layer A is difficult, or the height of the peak of tan δ is small. In addition, there is a tendency that the bending rigidity of the interlayer film for laminated glass is small, so that the sound insulating properties in a high-frequency region are lowered. When the content of the aromatic vinyl monomer unit in the block copolymer is more than 40% by mass, the characteristics as the thermoplastic elastomer tend to be hardly exhibited. The content of the aromatic vinyl monomer unit in the block copolymer can be determined from a charge ratio of the respective monomers in synthesizing the block copolymer, or the measurement results of ¹H-NMR or the like of the block copolymer. In the Examples of the present specification, a proportion of the monomer species was determined from the measurement results of ¹H-NMR, and the proportion of each monomer was described in terms of % by mass. Here, in the case where a plurality of the block copolymers is mixed, the content of the aliphatic unsaturated hydrocarbon monomer unit in the block copolymer is considered as an average value of the mixture.

A content of the aromatic vinyl monomer unit in the aromatic vinyl polymer block is preferably 80% by mass or more, more preferably 95% by mass or more, and still more preferably 98% by mass or more.

Examples of the aromatic vinyl monomer constituting the aromatic vinyl polymer block include styrene; alkylstyrenes, such as α-methylstyrene, 2-methylstyrene, 3-methylstyrene, 4-methylstyrene, 4-propylstyrene, 4-cyclohexylstyrene, 4-dodecylstyrene, etc.; arylstyrenes, such as 2-ethyl-4-benzylstyrene, 4-(phenylbutyl)styrene, 1-vinylnaphthalene, 2-vinylnaphthalene, etc.; halogenated styrenes; alkoxystyrenes; vinylbenzoate esters; and the like. These aromatic vinyl monomers may be used solely or may be used in combination of two or more thereof.

In addition, in the aromatic vinyl polymer block, a monomer other than the aromatic vinyl polymer monomer may be copolymerized. Examples of the monomer other than the aromatic vinyl monomer include unsaturated monomers, such as ethylene, propylene, 1-butene, 1-pentene, 1-hexene, 1-heptene, 1-octene, 1-nonene, 1-decene, 4-phenyl-1-butene, 6-phenyl-1-hexene, 3-methyl-1-butene, 4-methyl-1-butene, 3-methyl-1-pentene, 4-methyl-1-pentene, 3-methyl-1-hexene, 4-methyl-1-hexene, 5-methyl-1-hexene, 3,3-dimethyl-1-pentene, 3,4-dimethyl-1-pentene, 4,4-dimethyl-1-pentene, vinylcyclohexane, hexafluoropropene, tetrafluoroethylene, 2-fluoropropene, fluoroethylene, 1,1-difluoroethylene, 3-fluoropropene, trifluoroethylene, 3,4-dichloro-1-butene, norbornene, acetylene, etc.; (meth)acrylate-based monomers, such as methyl acrylate, methyl methacrylate, etc.; conjugated dienes, such as butadiene, 1,3-pentadiene, 1,3-hexadiene, isoprene, cyclopentadiene, 1,3-cyclohexadiene, 1,3-octadiene, 1,3-cyclooctadiene, etc.; and the like. A content of the monomer other than the aromatic vinyl monomer is preferably 20% by mass or less, more preferably 5% by mass or less, and still more preferably 2% by mass or less relative to the whole of the monomer units in the aromatic vinyl polymer block.

A content of the aliphatic unsaturated hydrocarbon monomer unit in the block copolymer is preferably 60% by mass or more, more preferably 70% by mass or more, still more preferably 75% by mass or more, and especially preferably 80% by mass or more relative to the whole of the monomer units of the block copolymer. The content of the aliphatic unsaturated hydrocarbon monomer unit in the block copolymer is preferably 95% by mass or less, more preferably 93% by mass or less, still more preferably 90% by mass or less, and especially preferably 86% by mass or less relative to the whole of the monomer units of the block copolymer. Furthermore, from the viewpoint of much more improving the moldability of the layer A or much more enhancing the height of the peak of tan δ, the content of the aliphatic unsaturated hydrocarbon monomer unit in the block copolymer is more preferably 85% by mass or less, still more preferably 84% by mass or less, especially preferably 83% by mass or less, and most preferably 82% by mass or less relative to the whole of the monomer units of the block copolymer. When the content of the aliphatic unsaturated hydrocarbon monomer unit in the block copolymer is less than 60% by mass, the characteristics as the thermoplastic elastomer tend to be hardly exhibited. When the content of the aliphatic unsaturated hydrocarbon monomer unit in the block copolymer is more than 95% by mass, there is a tendency that the molding of the layer A is difficult, or the height of the peak of tan δ is small. In addition, there is a tendency that the bending rigidity of the interlayer film for laminated glass is small, so that the sound insulating properties in a high-frequency region are lowered. The content of the aliphatic unsaturated hydrocarbon monomer unit in the block copolymer can be determined from a charge ratio of the respective monomers in synthesizing the block copolymer, or the measurement results of ¹H-NMR or the like of the block copolymer. In the Examples of the present specification, a proportion of the monomer species was determined from the measurement results of ¹H-NMR, and the proportion of each monomer was described in terms of % by mass. Here, in the case where a plurality of the block copolymers is mixed, the content of the aliphatic unsaturated hydrocarbon monomer unit in the block copolymer is considered as an average value of the mixture.

In the aliphatic unsaturated hydrocarbon polymer block, a monomer other than the aliphatic unsaturated hydrocarbon monomer may be copolymerized so long as its amount is small. A proportion of the aliphatic unsaturated hydrocarbon monomer unit in the aliphatic unsaturated hydrocarbon polymer block is preferably 80% by mass or more, more preferably 95% by mass or more, and still more preferably 98% by mass or more relative to the whole of the monomer units in the aliphatic unsaturated hydrocarbon polymer block.

Examples of the aliphatic unsaturated hydrocarbon monomer constituting the aliphatic unsaturated hydrocarbon polymer block include ethylene, propylene, 1-butene, 1-pentene, 1-hexene, 1-heptene, 1-octene, 1-nonene, 1-decene, 4-phenyl-1-butene, 6-phenyl-1-hexene, 3-methyl-1-butene, 4-methyl-1-butene, 3-methyl-1-pentene, 4-methyl-1-pentene, 3-methyl-1-hexene, 4-methyl-1-hexene, 5-methyl-1-hexene, 3,3-dimethyl-1-pentene, 3,4-dimethyl-1-pentene, 4,4-dimethyl-1-pentene, vinylcyclohexane, hexafluoropropene, tetrafluoroethylene, 2-fluoropropene, fluoroethylene, 1,1-difluoroethylene, 3-fluoropropene, trifluoroethylene, 3,4-dichloro-1-butene, butadiene, isoprene, dicyclopentadiene, norbornene, acetylene, and the like. These aliphatic unsaturated hydrocarbon monomers may be used solely or may be used in combination of two or more thereof.

From the viewpoints of easiness of availability and handling properties, the aliphatic unsaturated hydrocarbon monomer is preferably an aliphatic unsaturated hydrocarbon having 2 or more carbon atoms, and more preferably an aliphatic hydrocarbon having 4 or more carbon atoms, and is preferably an aliphatic unsaturated hydrocarbon having 12 or less carbon atoms, and more preferably an aliphatic hydrocarbon having 8 or less carbon atoms. Of those, it is preferred to use a conjugated diene, and it is more preferred to use butadiene, isoprene, and a combination of butadiene and isoprene.

In addition, from the viewpoints of easiness of availability and handling properties as well as easiness of synthesis, the aliphatic unsaturated hydrocarbon monomer is preferably a conjugated diene. A proportion of the conjugated diene unit in the aliphatic saturated hydrocarbon polymer block is preferably 80% by mass or more, more preferably 95% by mass or more, and still more preferably 98% by mass or more. From the viewpoint of improving the heat stability, in the case of using a conjugated diene as the constituent unit of the aliphatic unsaturated hydrocarbon polymer block, the block is preferably a hydrogenated product resulting from hydrogenating a part or the whole thereof. On that occasion, a hydrogenation ratio is preferably 60 mol% or more, more preferably 70 mol% or more, still more preferably 75 mol% or more, and especially preferably 80 mol% or more. The hydrogenation ratio as referred to herein is a value obtained by measuring an iodine value of the block copolymer before and after the hydrogenation reaction.

There are included plural binding forms of the conjugated diene in the aliphatic unsaturated hydrocarbon polymer block. For example, the isoprene unit includes a 1,4-bond, a 1,2-bond, and a 3,4-bond, and the butadiene unit includes a 1,4-bond and a 1,2-bond. A sum total of contents of the 1,2-bond and the 3,4-bond of the isoprene unit and a content of the 1,2-bond of the butadiene unit is preferably 20 mol% or more, more preferably 30 mol% or more, and still more preferably 40 mol% or more relative to the total amount of the conjugated diene units (total amount of the isoprene unit and the butadiene unit) in the aliphatic unsaturated hydrocarbon polymer block. In addition, the above-described sum total is preferably 100 mol% or less, more preferably 95 mol% or less, and still more preferably 90 mol% or less. In the case where the isoprene unit is contained in the polymer block (b), the above-described sum total is preferably 85 mol% or less, and more preferably 75 mol% or less. When the above-described sum total falls within the foregoing range, there is a tendency that the peak temperature of tan δ is made suitable, so that a maximum value of tan δ becomes high.

In the case where not only the conjugated diene is contained in the aliphatic unsaturated hydrocarbon polymer block, but also the isoprene unit is contained in an amount of 90 mol% or more in the conjugated diene unit, a monomer other than the conjugated diene monomer is not contained, and in the case where 90 mol% or more of the isoprene unit is contained, a sum total of the contents of the 1,2-bond and the 3,4-bond of the isoprene unit is preferably 30 mol% or more, and more preferably 40 mol% or more. In addition, the above-described sum total is preferably 75 mol% or less, and more preferably 60 mol% or less. When the above-described sum total falls within the foregoing range, there is a tendency that the peak temperature of tan δ is made suitable, so that a maximum value of tan δ becomes high.

In the case where not only the conjugated diene is contained in the aliphatic unsaturated hydrocarbon polymer block, but also the butadiene unit is contained in an amount of 90 mol% or more in the conjugated diene unit, a content of the 1,2-bond of the butadiene unit is preferably 65 mol% or more, and more preferably 80 mol% or more. In addition, the above-described content is preferably 100 mol% or less. When the above-described content falls within the foregoing range, there is a tendency that the peak temperature of tan δ is made suitable, so that a maximum value of tan δ becomes high.

In the case where not only the conjugated diene is contained in the aliphatic unsaturated hydrocarbon polymer block, but also the butadiene unit is contained in an amount of 90 mol% or more in the conjugated diene unit, a content of the 1,2-bond of the butadiene unit is preferably 20 mol% or more, and more preferably 65 mol% or more. In addition, the above-described content is preferably 100 mol% or less. When the above-described content falls within the foregoing range, there is a tendency that the peak temperature of tan δ is made suitable, so that a maximum value of tan δ becomes high.

In the case where not only the conjugated diene is contained in the aliphatic unsaturated hydrocarbon polymer block, but also a total content of the isoprene unit and the butadiene unit in the conjugated diene unit is 90 mol% or more, and a mass ratio of the isoprene unit and the butadiene unit is 10/90 to 90/10, a sum total of the contents of the 1,2-bond and the 3,4-bond of the isoprene unit and the butadiene unit is preferably 20 mol% or more, more preferably 40 mol% or more, and still more preferably 50 mol% or more. In addition, the above-described sum total is preferably 95 mol% or less, and more preferably 85 mol% or less. When the above-described sum total falls within the foregoing range, there is a tendency that the peak temperature of tan δ is made suitable, so that a maximum value of tan δ becomes high.

It is to be noted that the sum total of the contents of the 1,2-bond and the 3,4-bond in the isoprene unit and the content of the 1,2-bond in the butadiene unit do not change before and after the hydrogenation. That is, the 1,2-bond in the isoprene unit is a structure of (R¹, R²) = (CH₃, H) in a structural unit (A) and a structural unit (B) in the following chemical formula (1). In addition, the 3,4-bond in the isoprene unit is a structure of (R¹, R²) = (H, CH₃) in a structural unit (A) and a structural unit (B) in the following chemical formula (1). Furthermore, the 1,2-bond in the butadiene unit is a structure of (R¹, R²) = (H, H) in a structural unit (A) and a structural unit (B) in the following chemical formula (1).

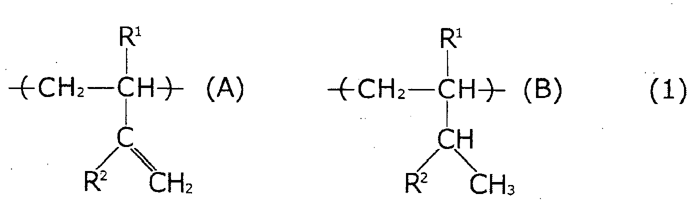

In the present invention, as described above, from the viewpoints of easiness of availability and handling properties as well as easiness of synthesis, the conjugated diene monomer is used. Then, in the present invention, from the viewpoint of improving the thermal creep resistance, such as heat stability, etc., or the weather resistance, such as change in color difference, etc., a hydrogenated product resulting from hydrogenating a part of the aliphatic unsaturated hydrocarbon polymer block containing a conjugated diene monomer unit is used. By hydrogenating the aliphatic unsaturated hydrocarbon polymer block, a residual amount of a carbon-to-carbon double bond derived from the conjugated diene monomer unit can be adjusted.

The residual amount of the carbon-to-carbon double bond derived from the conjugated diene monomer unit is preferably 2 mol% or more, more preferably 3 mol% or more, still more preferably 4 mol% or more, and especially preferably 5 mol% or more. When the residual amount of the carbon-to-carbon double bond derived from the conjugated diene monomer unit is 2 mol% or more, the thermal creep resistance of the interlayer film for laminated glass tends to become high.

The residual amount of the carbon-to-carbon double bond derived from the conjugated diene monomer unit is preferably 40 mol% or less, more preferably 35 mol% or less, still more preferably 30 mol% or less, and especially preferably 25 mol% or less. When the residual amount of the carbon-to-carbon double bond derived from the conjugated diene monomer unit is 40 mol% or less, even in the case of using the laminated glass over a long period of time, there is a tendency that the change in color difference is suppressed, so that the weather resistance is not lowered.

From the viewpoints of mechanical characteristics and molding processability, a weight average molecular weight of the block copolymer is preferably 30,000 or more, and more preferably 50,000 or more. From the viewpoints of mechanical characteristics and molding processability, the weight average molecular weight of the block copolymer is preferably 400,000 or less, and more preferably 300,000 or less. A ratio (Mw/Mn) of weight average molecular weight to number average molecular weight of the block copolymer is preferably 1.0 or more. The ratio (Mw/Mn) of weight average molecular weight to number average molecular weight of the block copolymer is preferably 2.0 or less, and more preferably 1.5 or less. Here, the weight average molecular weight refers to a weight average molecular weight in terms of polystyrene determined by the gel permeation chromatography (GPC) measurement, and the number average molecular weight refers to a number average molecular weight in terms of polystyrene determined by the GPC measurement.

Though a production method of the block copolymer is not particularly limited, the block copolymer can be, for example, produced by an anionic polymerization method, a cationic polymerization method, a radical polymerization method, or the like. For example, in the case of anionic polymerization, specific examples thereof include:
(i) a method of successively polymerizing an aromatic vinyl monomer, a conjugated diene monomer, and subsequently an aromatic vinyl monomer by using an alkyllithium compound as an initiator;
(ii) a method of successively polymerizing an aromatic vinyl monomer and a conjugated diene monomer by using an alkyllithium compound as an initiator and subsequently adding a coupling agent to undergo coupling;
(iii) a method of successively polymerizing a conjugated diene monomer and subsequently an aromatic vinyl monomer by using a dilithium compound as an initiator; and the like.

In the case of using a conjugated diene as the aliphatic unsaturated hydrocarbon monomer, by adding an organic Lewis base on the occasion of anionic polymerization, a 1,2-bond quantity and a 3,4-bond quantity of the thermoplastic elastomer can be increased, and the 1,2-bond quantity and the 3,4-bond quantity of the thermoplastic elastomer can be easily controlled by the addition amount of the organic Lewis base. By controlling them, the peak temperature or height of tan δ can be adjusted.

Examples of the organic Lewis base include esters, such as ethyl acetate, etc.; amines, such as triethylamine, N,N,N',N'-tetramethylethylenediamine (TMEDA), N-methylmorpholine, etc.; nitrogen-containing heterocyclic aromatic compounds, such as pyridine, etc.; amides, such as dimethylacetamide, etc.; ethers, such as dimethyl ether, diethyl ether, tetrahydrofuran (THF), dioxane, etc.; glycol ethers, such as ethylene glycol dimethyl ether, diethylene glycol dimethyl ether, etc.; sulfoxides, such as dimethyl sulfoxide, etc.; ketones, such as acetone, methyl ethyl ketone, etc.; and the like.

In the case of subjecting the unhydrogenated polystyrene-based elastomer to a hydrogenation reaction, the hydrogenation reaction can be conducted by dissolving the obtained unhydrogenated polystyrene-based elastomer in a solvent inert to a hydrogenation catalyst or using the unhydrogenated polystyrene-based elastomer without being isolated from a reaction liquid, and allowing the unhydrogenated polystyrene-based elastomer to react with hydrogen in the presence of a hydrogenation catalyst.

Examples of the hydrogenation catalyst include Raney nickel; heterogeneous catalysts in which a metal, such as Pt, Pd, Ru, Rh, Ni, etc. , is supported on a carrier, such as carbon, alumina, diatomaceous earth, etc.; Ziegler-based catalysts composed of a combination of a transition metal compound with an alkylaluminum compound, an alkyllithium compound, etc.; metallocene-based catalysts; and the like. The hydrogenation reaction can be generally conducted under conditions at a hydrogen pressure of 0.1 MPa or more and 20 MPa or less and at a reaction temperature of 20°C or higher and 250°C or lower for a reaction time of 0.1 hours or more and 100 hours or less.

### (Other additive components)

In the layer A, a heat insulating material, an antioxidant, an ultraviolet ray absorber, a photostabilizer, an antiblocking agent, a pigment, a dye, and the like may be added as other components, if desired.

### (Heat insulating material)

The interlayer film can be given a heat insulating function, and a transmittance at wavelength of 1500 nm can be regulated to 50% or less when the a laminated glass is formed, by incorporating the heat insulating material (for example, an inorganic heat insulating fine particle or an organic heat insulating compound each having an infrared absorption ability) into the layer A. Examples of the inorganic heat insulating fine particle include tin-doped indium oxide (ITO), antimony-doped tin oxide (ATO), aluminum-doped zinc oxide (AZO), a metal-doped tungsten oxide represented by the general formula: MₘWOₙ (M represents a metal element; m is 0.01 or more and 1.0 or less; and n is 2.2 or more and 3.0 or less), zinc antimonate (ZnSb₂O₅), lanthanum hexaboride, and the like. Of those, ITO, ATO, and a metal-doped tungsten oxide are more preferred. Examples of the metal element represented by M in the metal-doped tungsten oxide include Cs, Tl, Rb, Na, K, and the like, and in particular, Cs is preferred. From the viewpoint of heat insulating properties, m is preferably 0.2 or more, and more preferably 0.3 or more, and it is preferably 0.5 or less, and more preferably 0.4 or less.

In the case where the inorganic heat insulating fine particle is contained, its content is preferably 0.01% by mass or more, more preferably 0.05% by mass or more, still more preferably 0.1% by mass or more, and especially preferably 0.2% by mass or more relative to the resins used in the layer constituting the interlayer film for laminated glass (the thermoplastic elastomer and thermoplastic resin, and the like in every layer; hereinafter the same). In addition, the content of the inorganic heat insulating fine particle is preferably 5% by mass or less, and more preferably 3% by mass or less. When the content of the inorganic heat insulating fine particle is more than 5% by mass, there is a concern that the transmittance of visible rays is influenced. An average particle diameter of the inorganic heat insulating fine particle is preferably 100 nm or less, and more preferably 50 nm or less from the viewpoint of transparency. It is to be noted that the average particle diameter of the inorganic heat insulating fine particle as referred to herein means one measured by a laser diffraction instrument.

Examples of the organic heat insulating material include phthalocyanine compounds, naphthalocyanine compounds, and the like. From the viewpoint of more improving the heat insulating properties, it is preferred that the organic heat insulating material contains a metal. Examples of the metal include Na, K, Li, Cu, Zn, Fe, Co, Ni, Ru, Rh, Pd, Pt, Mn, Sn, V, Ca, Al, and the like, with Ni being especially preferred.

A content of the organic heat insulating material is preferably 0.001% by mass or more, more preferably 0.005% by mass or more, and still more preferably 0.01% by mass or more relative to the resins used in the layer constituting the interlayer film for laminated glass (the thermoplastic elastomer and thermoplastic resin, and the like in every layer; hereinafter the same). In addition, the content of the organic heat insulating material is preferably 1% by mass or less, and more preferably 0.5% by mass or less. When the content of the heat insulating compound is more than 1% by mass, there is a concern that the transmittance of visible rays is influenced.

### (Ultraviolet ray absorber)

In addition, examples of the ultraviolet ray absorber include benzotriazole-based ultraviolet ray absorbers, such as 2-(5-methyl-2-hydroxyphenyl)benzotriazole, 2-[2-hydroxy-3,5-bis(α,α'-dimethylbenzyl)phenyl]-2H-benzot riazole, 2-(3,5-di-t-butyl-2-hydroxyphenyl)benzotriazole, 2-(5-chloro-2-benzotriazolyl)-6-tert-butyl-p-cresol, 2-(3-t-butyl-5-methyl-2-hydroxyphenyl)-5-chlorobenzotriazo le, 2-(3,5-di-t-butyl-5-methyl-2-hydroxyphenyl)-5-chlorobenzot riazole, 2-(3,5-di-t-amyl-2-hydroxyphenyl)benzotriazole, 2-(2'-hydroxy-5'-t-octylphenyl)benzotriazole, etc.; hindered amine-based ultraviolet ray absorbers, such as 2,2,6,6-tetramethyl-4-piperidyl benzoate, bis(2,2,6,6-tetramethyl-4-piperidyl)sebacate, bis(1,2,2,6,6-pentamethyl-4-piperidyl)-2-(3,5-di-t-butyl-4 -hydroxybenzyl)-2-n-butylmalonate, 4-(3-(3,5-di-t-butyl-4-hydroxyphenyl)propionyloxy)-1-(2-(3 -(3,5-di-t-butyl-4-hydroxyphenyl)propionyloxy)ethyl)-2,2,6 ,6-tetramethylpiperidine, etc.; benzoate-based ultraviolet ray absorbers, such as 2,4-di-t-butylphenyl-3,5-di-t-butyl-4-hydroxybenzoate, hexadecyl-3,5-di-t-butyl-4-hydroxybenzoate, etc.; and the like. An addition amount of such an ultraviolet ray absorber is preferably 10 ppm or more, and more preferably 100 ppm or more on the basis of a mass relative to the resins used in the layer constituting the interlayer film for laminated glass. In addition, the addition amount of the ultraviolet ray absorber is preferably 50,000 ppm or less, and more preferably 10,000 ppm or less on the basis of a mass relative to the resins used in the layer constituting the interlayer film for laminated glass. When the addition amount of the ultraviolet ray absorber is smaller than 10 ppm, there is a concern that the sufficient effects are hardly exhibited, whereas even when the addition amount of the ultraviolet ray absorber is more than 50,000 ppm, remarkable effects are not expected. These ultraviolet ray absorbers can also be used in combination of two or more thereof.

### (Antioxidant)

Examples of the antioxidant include phenol-based antioxidants, phosphorus-based antioxidants, sulfur-based antioxidants, and the like. Of those, phenol-based antioxidants are preferred, and alkyl-substituted phenol-based antioxidants are especially preferred.

Examples of the phenol-based antioxidant include acrylate-based compounds, such as 2-t-butyl-6-(3-t-butyl-2-hydroxy-5-methylbenzyl)-4-methylp henyl acrylate, 2,4-di-t-amyl-6-(1-(3,5-di-t-amyl-2-hydroxyphenyl)ethyl)ph enyl acrylate, etc.; alkyl-substituted phenol-based compounds, such as 2,6-di-t-butyl-4-methylphenol, 2,6-di-t-butyl-4-ethylphenol, octadecyl-3-(3,5-)di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyl oxy)-1,1-dimethylethyl)-2,4,8,10-tetraoxaspiro[5.5]undecan e, 1,1,3-tris(2-methyl-4-hydroxy-5-t-butylphenyl)butane, 1,3,5-tris(4-tert-butyl-3-hydroxy-2,6-dimethylbenzyl)-1,3, 5-triazine-2,4,6-(1H,3H,5H)-trione, 1,3,5-trimethyl-2,4,6-tris(3,5-di-t-butyl-4-hydroxybenzyl) benzene, tetrakis(methylene-3-(3',5'-di-t-butyl-4'-hydroxyphenyl)pr opionate)methane, triethylene glycol bis(3-(3-t-butyl-4-hydroxy-5-methylphenyl)propionate), etc.; triazine group-containing phenol-based compounds, such as 1,3,5-tris(2,6-dimethyl-3-hydroxy-4-t-butylbenzyl)-1,3,5-t riazine-2,4,6(1H,3H,5H)-trione, 6-(4-hydroxy-3,5-di-t-butylanilino)-2,4-bis-octylthio-1,3, 5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, 2-octylthio-4,6-bis-(3,5-di-t-butyl-4-oxyanilino)-1,3,5-tr iazine, etc.; and the like.

Examples of the phosphorus-based antioxidant include monophosphite-based compounds, such as triphenyl phosphite, diphenylisodecyl phosphite, phenyldiisodecyl phosphite, tris(nonylphenyl) phosphite, tris(dinonylphenyl) phosphite, tris(2-t-butyl-4-methylphenyl) phosphite, tris(2,4-di-t-butyl) phosphite, tris(cyclohexylphenyl) phosphite, tris(2,4-di-t-butylphenyl) phosphate, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, 10-decyloxy-9,10-dihydro-9-oxa-10-phosphaphenanthrene, etc.; diphosphite-based compounds, such as 4,4'-butylidene-bis(3-methyl-6-t-butylphenyl-di-tridecylph osphite), 4,4'-isopropylidene-bis(phenyl-di-alkyl(C12-C15) phosphite)4,4'-isopropylidene-bis(diphenylmonoalkyl(C12-C1 5)phosphite), 1,1,3-tris(2-methyl-4-di-tridecylphosphite-5-t-butylphenyl )butane, tetrakis(2,4-di-t-butylphenyl)-4,4'-biphenylene phosphite, etc.; and the like. Of those, monophosphite-based compounds are preferred.

Examples of the sulfur-based antioxidant include dilauryl 3,3'-thiodipropionate, distearyl 3,3-thiodipropionate, lauryl stearyl 3,3'-thiodipropionate, pentaerythritol-tetrakis-(β-lauryl-thiopropionate), 3,9-bis(2-dodecylthioethyl)-2,4,8,10-tetraoxaspiro[5.5]und ecane, and the like.

These antioxidants can be used solely or in combination of two or more thereof. A compounding amount of the antioxidant is preferably 0.001 parts by mass or more, and more preferably 0.01 parts by mass or more based on 100 parts by mass of the resins used in the layer constituting the interlayer film for laminated glass. In addition, the compounding amount of the antioxidant is preferably 5 parts by mass or less, more preferably 4 parts by mass or less, and still more preferably 3 parts by mass or less based on 100 parts by mass of the resins used in the layer constituting the interlayer film for laminated glass. When the amount of the antioxidant is smaller than 0.001 parts by mass, there is a concern that the sufficient effects are hardly exhibited, whereas even when it is more than 5 parts by mass, remarkable effects are not expected.

### (Photostabilizer)

Examples of the photostabilizer include hindered amine-based materials, such as "ADEKA STAB LA-57 (a trade name)", manufactured by Adeka Corporation and "TINUVIN 622 (a trade name)", manufactured by Ciba Specialty Chemicals Inc.

### (Adhesive force adjustor)

In order to adjust an adhesive force between the layer A and the layer B as described later, an adhesive force adjustor may be added to the layer A or the layer B. Examples of the adhesive force adjustor include polyolefins having an adhesive functional group, such as a carboxyl group, a derivative group of a carboxyl group, an epoxy group, a boronic acid group, a derivative group of a boronic acid group, an alkoxyl group, a derivative group of an alkoxyl group, etc.

In particular, in the case of using a polyvinyl acetal resin for the layer B, by adding a polyolefin having an adhesive functional group to the layer A and undergoing coextrusion molding between the layer A and the layer B, the adhesive force between the layer A and the layer B can be suitably adjusted. An addition amount of the polyolefin having an adhesive functional group is preferably 20 parts by mass or less, more preferably 15 parts by mass or less, and still more preferably 10 parts by mass or less based on 100 parts by mass of the thermoplastic elastomer of the layer A. When the addition amount of the polyolefin having an adhesive functional group is more than 20 parts by mass, on the occasion of preparing a laminated glass, there is a concern that the haze is deteriorated. As the polyolefin having an adhesive functional group, among the above-described polyolefins, polypropylene containing a carboxyl group is suitable from the viewpoints of easiness of availability, easiness of adjustment of the adhesion, and easiness of adjustment of the haze.

### [Layer B]

As described above, the interlayer film for laminated glass of the present invention is an interlayer film for laminated glass having a sound insulting layer (layer A) and thermoplastic resin layers containing a thermoplastic resin (layers B), the sound insulating layer (layer A) being located between at least two of the thermoplastic resin layers (layers B).

From the viewpoint of improving the strength of the interlayer film for laminated glass or improving the adhesion to a glass, the thermoplastic resin to be used for an external layer is preferably a polyvinyl acetal resin or an ionomer resin. A constitution of the layer B is hereunder described in detail.

In the thermoplastic resin which is used for the layer B of the present invention, a shear storage modulus at a temperature of 25°C as measured by conducting a complex shear viscosity test at a frequency of 1 Hz in accordance with JIS K 7244-10 is preferably 10.0 MPa or more, more preferably 12.0 MPa or more, still more preferably 20.0 MPa or more, yet still more preferably 40.0 MPa or more, especially preferably 60.0 MPa or more, and most preferably 80.0 MPa or more. When the shear storage modulus under the above-described condition is less than 10.0 MPa, there is a tendency that suitable shear storage modulus and maximum loss factor cannot be kept, and the sound insulating properties or bending rigidity of the interlayer film for laminated glass is lowered. The layer B having a shear storage modulus of 10.0 MPa or more can be, for example, obtained by regulating an amount of a plasticizer to 40 parts by mass or less based on 100 parts by mass of the polyvinyl acetal resin. In addition, an upper limit of the shear storage modulus at 25°C is not particularly limited, and it is preferably 900 MPa or less from the viewpoints of moldability and handling properties of the interlayer film for laminated glass.

### (Thermoplastic resin)

The thermoplastic resin as referred to in the present specification means a polymer compound which when heated, is softened to exhibit plasticity, whereas when cooled, is solidified, and is distinguished from a thermoplastic elastomer. In view of the fact that the layer B serving as an external layer contains the thermoplastic resin, there is a tendency that the moist heat resistance, weather resistance, or strength of the interlayer film for laminated glass is improved, or when formed into a laminated glass, the bending strength or penetration resistance is improved.

In general, when interlaminar separation occurs in the interlayer film for laminated glass serving as an interlayer film for laminated glass, water, such as moisture, etc., penetrates into a gap between the separated layers, and the edge side of the laminated glass is liable to be whitened. In addition, even in the case where the adhesion between the interlayer film for laminated glass and the glass is not sufficient, water, such as moisture, etc., penetrates into a gap between the interlayer film for laminated glass and the glass, so that the edge side of the laminated glass is liable to be whitened. In addition to the above, in the case where a content of the plasticizer in the interlayer film for laminated glass is high, or in the case where a plasticizer with low compatibility with the thermoplastic resin is used, on the occasion of absorbing water, the edge side of the laminated glass is liable to be whitened.

Meanwhile, in the case where the plasticizer is not contained, or a thermoplastic resin layer with a small content of the plasticizer is used as an external layer, not only even when water is absorbed, the edge side is hardly whitened, but also even when water is absorbed, the migration of the plasticizer hardly occurs, and hence, the sound insulating properties tend to hardly change. In addition, in the case of using a plasticizer with high compatibility with the thermoplastic resin, even when water is absorbed, the whitening from the edge side tends to be suppressed.

Though the kind of the thermoplastic resin is not particularly limited, examples thereof include a polyvinyl acetal resin, an ionomer resin, a vinyl chloride resin, a urethane resin, a polyamide resin, and the like.

In the case of using a composition containing a thermoplastic resin, such as a polyvinyl acetal resin, etc., as the layer B, the layer B contains the thermoplastic resin, such as a polyvinyl acetal resin, etc., in a content of preferably 40% by mass or more, more preferably 50% by mass or more, still more preferably 60% by mass or more, especially preferably 80% by mass or more, and much more preferably 90% by mass or more. The layer B may be composed of only the thermoplastic resin, such as a polyvinyl acetal resin, etc. When the content of the thermoplastic resin, such as a polyvinyl acetal resin, etc., is less than 40% by mass, it becomes difficult to obtain the desired shear storage modulus.

### (Polyvinyl acetal resin)

An average degree of acetalization of the polyvinyl acetal resin is preferably 40 mol% or more, and it is preferably 90 mol% or less. When the average degree of acetalization is less than 40 mol%, the compatibility with a solvent, such as a plasticizer, etc., is not preferred. When the average degree of acetalization is more than 90 mol%, there is a concern that the reaction for obtaining the polyvinyl acetal resin takes a long time, so that such is not preferred from the process standpoint. The average degree of acetalization is more preferably 60 mol% or more, and from the viewpoint of water resistance, it is still more preferably 65 mol% or more. In addition, the average degree of acetalization is more preferably 85 mol% or less, and still more preferably 80 mol% or less.

An average content of the vinyl acetate unit of the polyvinyl acetal resin is preferably 30 mol% or less. When the average content of the vinyl acetate unit is more than 30 mol%, blocking is liable to be caused at the time of producing the polyvinyl acetal resin, so that the production is hardly achieved. The average content of the vinyl acetate unit is more preferably 20 mol% or less.

An average content of the vinyl alcohol unit of the polyvinyl acetal resin is preferably 15 mol% or more, more preferably 20 mol% or more, and still more preferably 25 mol% or more. The average content of the vinyl alcohol unit of the polyvinyl acetal resin is preferably 50 mol% or less, more preferably 45 mol% or less, and still more preferably 40 mol% or less. When the average content of the vinyl alcohol unit is less than 15 mol%, the adhesion to a glass tends to be lowered, whereas when the average content of the vinyl alcohol unit is more than 50 mol%, the water resistance tends to be lowered.

The polyvinyl acetal resin is generally constituted of a vinyl acetal unit, a vinyl alcohol unit, and a vinyl acetate unit, and these respective units can be, for example, measured by the "Testing Methods for Polyvinyl Butyral" of JIS K 6728 or a nuclear magnetic resonance method (NMR).

In the case where the polyvinyl acetal resin contains a unit other than the vinyl acetal unit, by measuring a unit quantity of vinyl alcohol and a unit quantity of vinyl acetate and subtracting these both unit quantities from a vinyl acetal unit quantity in the case of not containing a unit other than the vinyl acetal unit, the remaining vinyl acetal unit quantity can be calculated.

The polyvinyl acetal resin can be produced by a conventionally known method, and representatively, the polyvinyl acetal resin can be produced by acetalization of polyvinyl alcohol with an aldehyde. Specifically, there is exemplified a method in which polyvinyl alcohol is dissolved in warm water, the resulting aqueous solution is held at a prescribed temperature, for example, 0°C or higher, preferably 10°C or higher and 90°C or lower, and preferably 20°C or lower, the necessary acid catalyst and aldehyde are added, the acetalization reaction is allowed to proceed while stirring, and subsequently, the reaction temperature is increased to 70°C to conduct aging, thereby accomplishing the reaction, followed by neutralization, water washing, and drying to obtain a powder of the polyvinyl acetal resin; or the like.

A viscosity average polymerization degree of polyvinyl alcohol serving as a raw material of the polyvinyl acetal resin is preferably 100 or more, more preferably 300 or more, still more preferably 400 or more, yet still more preferably 600 or more, especially preferably 700 or more, and most preferably 750 or more. When the viscosity average polymerization degree of polyvinyl alcohol is too low, there is a concern that the penetration resistance or creep resistance, particularly creep resistance under high-temperature and high-humidity conditions, such as those at 85°C and at 85% RH, are lowered. In addition, the viscosity average polymerization degree of polyvinyl alcohol is preferably 5, 000 or less, more preferably 3,000 or less, still more preferably 2,500 or less, especially preferably 2,300 or less, and most preferably 2,000 or less. When the viscosity average polymerization degree of polyvinyl alcohol is more than 5, 000, there is a concern that the molding of the layer B is difficult.

Furthermore, for the purpose of improving lamination aptitude of the resulting interlayer film for laminated glass to obtain a laminated glass with a much more excellent appearance, the viscosity average polymerization degree of polyvinyl alcohol is preferably 1,800 or less.

It is to be noted that since the viscosity average polymerization degree of the polyvinyl acetal resin coincides with the viscosity average polymerization degree of polyvinyl alcohol serving as a raw material, the above-described preferred viscosity average polymerization degree of polyvinyl alcohol coincides with the preferred viscosity average polymerization degree of the polyvinyl acetal resin.

It is preferred to set the average content of the vinyl acetate unit of the resulting polyvinyl acetal resin to 30 mol% or less, and hence, it is preferred to use polyvinyl alcohol having a saponification degree of 70 mol% or more. When the saponification degree of polyvinyl alcohol is less than 70 mol%, there is a concern that transparency or heat resistance of the polyvinyl acetal resin is lowered, and also, there is a concern that the reactivity with the aldehyde is lowered, too. The saponification degree is more preferably 95 mol% or more.

The viscosity average polymerization degree and saponification degree of polyvinyl alcohol can be, for example, measured in accordance with the "Testing Methods for Polyvinyl Alcohol" of JIS K 6726.

The aldehyde which is used for acetalization of polyvinyl alcohol is preferably an aldehyde having 1 or more and 12 or less carbon atoms. When the carbon number of the aldehyde is more than 12, the reactivity of the acetalization is lowered, and moreover, blocking of the resin is liable to be generated during the reaction, and the synthesis of the polyvinyl acetal resin is liable to be accompanied with difficulties.

The aldehyde is not particularly limited, and examples thereof include aliphatic, aromatic, or alicyclic aldehydes, such as formaldehyde, acetaldehyde, propionaldehyde, n-butyl aldehyde, isobutyl aldehyde, valeraldehyde, n-hexyl aldehyde, 2-ethylbutyl aldehyde, n-heptyl aldehyde, n-octyl aldehyde, n-nonyl aldehyde, n-decyl aldehyde, benzaldehyde, cinnamaldehyde, etc. Of those, aliphatic aldehydes having 2 or more and 6 or less carbon atoms are preferred, and above all, butyl aldehyde is especially preferred. In addition, the above-described aldehydes may be used solely or may be used in combination of two or more thereof. Furthermore, a small amount of a polyfunctional aldehyde or an aldehyde having other functional group, or the like may also be used in combination in an amount in the range of 20% by mass or less relative to the total amount of the aldehyde used.

The polyvinyl acetal resin is most preferably polyvinyl butyral. As the polyvinyl butyral resin, a modified polyvinyl butyral resin obtained by subjecting polyvinyl alcohol-based polymer obtained by saponifying a copolymer of a vinyl ester and other monomer to butyralization with butyl aldehyde can be used. Here, examples of the other monomer include α-olefins, such as ethylene, propylene, 1-butene, isobutene, 1-hexene, etc. ; carboxylic acids or derivatives thereof, such as fumaric acid, maleic acid, itaconic acid, maleic anhydride, itaconic anhydride, etc.; acrylic acid or salts thereof; acrylate esters, such as methyl acrylate, ethyl acrylate, n-propyl acrylate, isopropyl acrylate, etc.; methacrylic acid or salts thereof; methacrylate esters, such as methyl methacrylate, ethyl methacrylate, n-propyl methacrylate, isopropyl methacrylate, etc.; acrylamide derivatives, such as acrylamide, N-methylacrylamide, N-ethylacrylamide, etc.; methacrylamide derivatives, such as methacrylamide, N-methylmethacrylamide, N-ethylmethacrylamide, etc.; vinyl ethers, such as methyl vinyl ether, ethyl vinyl ether, n-propyl vinyl ether, isopropyl vinyl ether, n-butyl vinyl ether, etc.; hydroxyl group-containing vinyl ethers, such as ethylene glycol vinyl ether, 1,3-propanediol vinyl ether, 1, 4-butanediol vinyl ether, etc.; allyl ethers, such as allyl acetate, propyl allyl ether, butyl allyl ether, hexyl allyl ether, etc.; monomers having an oxyalkylene group; hydroxyl group-containing α-olefins, such as isopropenyl acetate, 3-buten-1-ol, 4-penten-1-ol, 5-hexen-1-ol, 7-octen-1-ol, 9-decen-1-ol, 3-methyl-3-buten-1-ol, etc.; monomers having a sulfonic acid group, such as ethylene sulfonic acid, allylsulfonic acid, methallylsulfonic acid, 2-acrylamide-2-methylpropanesulfonic acid, etc.; monomers having a cationic group, such as vinyloxyethyltrimethylammonium chloride, vinyloxybutyltrimethylammonium chloride, vinyloxyethyldimethylamine, vinyloxymethyldiethylamine, N-acrylamidomethyltrimethylammonium chloride, N-acrylamidoethyltrimethylammonium chloride, N-acrylamidodimethylamine, allyltrimethylammonium chloride, methallyltrimethylammonium chloride, dimethylallylamine, allylethylamine, etc.; monomers having a silyl group, such as vinyltrimethoxysilane, vinylmethyldimethoxysilane, vinyldimethylmethoxysilane, vinyltriethoxysilane, vinylmethyldiethoxysilane, vinyldimethylethoxysilane, 3-(meth)acrylamido-propyltrimethoxysilane, 3-(meth)acrylamide-propyltriethoxysilane, etc.; and the like. On the occasion of copolymerizing the vinyl ester with other monomer, though a use amount of the other monomer varies with the use purpose and application and the like, in general, it is preferably 20 mol% or less, and more preferably 10 mol% or less in terms of a proportion on the basis of the whole of the monomers to be used for the copolymerization.

### (Ionomer)

A kind of the ionomer is not particularly limited, and examples thereof include resins having a constituent unit derived from ethylene and a constituent unit derived from an α,β-unsaturated carboxylic acid, in which at least a part of the α,β-unsaturated carboxylic acid is neutralized with a metal ion. As the metal ion, there is, for example, a sodium ion. In the ethylene · α,β-unsaturated carboxylic acid copolymer serving as a base polymer, a content proportion of the constituent unit of an α,β-unsaturated carboxylic acid is preferably 2% by mass or more, and more preferably 5% by mass or more. In addition, the content proportion of the constituent unit of an α,β-unsaturated carboxylic acid is preferably 30% by mass or less, and more preferably 20% by mass or less. In the present invention, from the standpoint of easiness of availability, an ionomer of an ethylene acrylic acid copolymer and an ionomer of an ethylene methacrylic acid copolymer are preferred. As for examples of the ethylene-based ionomer, there can be exemplified a sodium ionomer of an ethylene acrylic acid copolymer and a sodium ionomer of an ethylene · methacrylic acid copolymer as especially preferred examples.

Examples of the α,β-unsaturated carboxylic acid constituting the ionomer include acrylic acid, methacrylic acid, maleic acid, monomethyl maleate, monoethyl maleate, maleic anhydride, and the like. Of those, acrylic acid or methacrylic acid is especially preferred.

In the layer B, as a component other than the thermoplastic resin, such as the polyvinyl acetal resin, etc., a plasticizer, an antioxidant, an ultraviolet ray absorber, a photostabilizer, an antiblocking agent, a pigment, a dye, a heat insulating material (for example, an inorganic heat insulating fine particle or an organic heat insulating material each having infrared absorption ability), an adhesive force adjustor and/or an additive of every kind for adjusting the adhesion, and the like may also be further added, if desired. Examples of the ultraviolet ray absorber, the antioxidant, the photostabilizer, and the like include those contained in the layer A as described above.

### (Plasticizer)

Though the plasticizer which is used for the layer B of the present invention is not particularly limited, carboxylic acid ester-based plasticizers, such as monovalent carboxylic acid ester-based or polyvalent carboxylic acid ester-based plasticizers, etc.; phosphate ester-based plasticizers; organic phosphite ester-based plasticizers; and the like can be used. Besides, polymeric plasticizers, such as carboxylic acid polyester-based, carbonic acid polyester-based, or polyalkylene glycol-based plasticizers, etc.; ester compounds of a hydroxycarboxylic acid and a polyhydric alcohol, such as castor oil, etc.; and hydroxycarboxylic acid ester-based plasticizers, such as an ester compound of a hydroxycarboxylic acid and a monohydric alcohol, etc., can also be used.

The monovalent carboxylic acid ester-based plasticizer is a compound obtained through a condensation reaction between a monovalent carboxylic acid, such as butanoic acid, isobutanoic acid, hexanoic acid, 2-ethylbutanoic acid, heptanoic acid, octylic acid, 2-ethylhexanoic acid, lauric acid, etc., and a polyhydric alcohol, such as ethylene glycol, diethylene glycol, triethylene glycol, tetraethylene glycol, polyethylene glycol, polypropylene glycol, glycerin, etc., and specific examples of the compound include triethylene glycol di-2-diethylbutanoate, triethylene glycol diheptanoate, triethylene glycol di-2-ethylhexanoate, triethylene glycol dioctanoate, tetraethylene glycol di-2-ethylbutanoate, tetraethylene glycol diheptanoate, tetraethylene glycol di-2-ethylhexanoate, tetraethylene glycol dioctanoate, diethylene glycol di-2-ethylhexanoate, PEG#400 di-2-ethylhexanoate, triethylene glycol mono-2-ethylhexanoate, a fully or partially esterified compound of glycerin or diglycerin with 2-ethylhexanoic acid, and the like. "PEG#400" as referred to herein expresses a polyethylene glycol having an average molecular weight of 350 to 450.

As the polyvalent carboxylic acid ester-based plasticizer, there are exemplified compounds obtained through a condensation reaction between a polyvalent carboxylic acid, such as adipic acid, succinic acid, azelaic acid, sebacic acid, phthalic acid, isophthalic acid, terephthalic acid, trimellitic acid, etc., and an alcohol having 1 to 12 carbon atoms, such as methanol, ethanol, butanol, hexanol, 2-ethylbutanol, heptanol, octanol, 2-ethylhexanol, decanol, dodecanol, butoxyethanol, butoxyethoxyethanol, benzyl alcohol, etc. Specific examples of the compound include dihexyl adipate, di-2-ethylbutyl adipate, diheptyl adipate, dioctyl adipate, di-2-ethylhexyl adipate, di(butoxyethyl) adipate, di(butoxyethoxyethyl) adipate, mono(2-ethylhexyl) adipate, dibutyl sebacate, dihexyl sebacate, di-2-ethylbutyl sebacate, dibutyl phthalate, dihexyl phthalate, di(2-ethylbutyl) phthalate, dioctyl phthalate, di(2-ethylhexyl) phthalate, benzylbutyl phthalate, didodecyl phthalate, and the like.

Examples of the phosphoric acid-based plasticizer or phosphorous acid-based plasticizer include compounds obtained through a condensation reaction between phosphoric acid or phosphorous acid and an alcohol having 1 to 12 carbon atoms, such as methanol, ethanol, butanol, hexanol, 2-ethylbutanol, heptanol, octanol, 2-ethylhexanol, decanol, dodecanol, butoxyethanol, butoxyethoxyethanol, benzyl alcohol, etc. Specific examples of the compound include trimethyl phosphate, triethyl phosphate, tripropyl phosphate, tributyl phosphate, tri(2-ethylhexyl) phosphate, tri(butoxyethyl) phosphate, tri(2-ethylhexyl) phosphite, and the like.

As the carboxylic acid polyester-based plasticizer, there may be used carboxylic acid polyesters obtained through alternate copolymerization between a polyvalent carboxylic acid, such as oxalic acid, malonic acid, succinic acid, adipic acid, suberic acid, sebacic acid, dodecane diacid, 1,2-cyclohexanedicarboxylic acid, 1,3-cyclohexanedicarboyxlic acid, 1,4-cyclohexanedicarboxylic acid, etc., and a polyhydric alcohol, such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, 1,4-bis(hydroxymethyl)cyclohexane, etc.; polymers of hydroxycarboxylic acids (hydroxycarboxylic acid polyesters) such as an aliphatic hydroxycarboxylic acid, e.g., glycolic acid, lactic acid, 2-hydroxybutyric acid, 3-hydroxybutyric acid, 4-hydroxybutyric acid, 6-hydroxyhexanoic acid, 8-hydroxyhexanoic acid, 10-hydroxydecanoic acid, and 12-hydroxydodecanoic acid, and a hydroxycarboxylic acid having an aromatic ring, e.g., 4-hydroxybenzoic acid, 4-(2-hydroxyethyl)benzoic-acid, etc.; and carboxylic acid polyesters obtained through ring opening polymerization of a lactone compound, such as an aliphatic lactone compound, e.g., γ-butyrolactone, γ-valerolactone, δ-valerolactone, β-methyl-δ-valerolactone, δ-hexanolactone, ε-caprolactone, lactide, etc., a lactone compound having an aromatic ring, phthalide, or the like. A terminal structure of such a carboxylic acid polyester is not particularly limited, and it may be a hydroxyl group or a carboxyl group, or it may also be an ester bond resulting from allowing a terminal hydroxyl group or a terminal carboxyl group to react with a monovalent carboxylic acid or a monohydric alcohol.

Examples of the carbonic acid polyester-based plasticizer include carbonic acid polyesters obtained through alternate copolymerization of a polyhydric alcohol, such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octnediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, 1,4-bis(hydroxymethyl)cyclohexane, etc. and a carbonate ester, such as dimethyl carbonate, diethyl carbonate, etc., by means of an ester interchange reaction. Though a terminal structure of such a carbonic acid polyester compound is not particularly limited, it may be a carbonate ester group, a hydroxyl group, or the like.

Examples of the polyalkylene glycol-based plasticizer include polymers obtained through ring opening polymerization of an alkylene oxide, such as ethylene oxide, propylene oxide, butylene oxide, oxetane, etc., with a monohydric alcohol, a polyhydric alcohol, a monovalent carboxylic acid, or a polyvalent carboxylic acid as an initiator.

Examples of the hydroxycarboxylic acid ester-based plasticizer include monohydric alcohol esters of a hydroxycarboxylic acid, such as methyl ricinoleate, ethyl ricinoleate, butyl ricinoleate, methyl 6-hydroxyhexanoate, ethyl 6-hydroxyhexanoate, and butyl 6-hydroxyhexnoate; polyhydric alcohol esters of a hydroxycarboxylic acid, such as ethylene glycol di(6-hydroxyhexanoic acid) ester, diethylene glycol di(6-hydroxyhexanoic acid) ester, triethylene glycol di(6-hydroxyhexanoic acid) ester, 3-methyl-1,5-pentanediol di(6-hydroxyhexanoic acid) ester, 3-methyl-1,5-pentanediol di(2-hydroxybutyric acid) ester, 3-methyl-1,5-pentanediol di(3-hydroxybutyric acid) ester, 3-methyl-1,5-pentanediol di(4-hydroxybutyric acid) ester, triethylene glycol di(2-hydroxybutyric acid) ester, glycerin tri(ricinoleic acid) ester, and di(1-(2-ethylhexyl)) L-tartarate; and castor oil. Besides, polyhydric alcohol ester compounds of a hydroxyl carboxylic acid in which a number of k groups derived from a hydroxycarboxylic acid are replaced with a group derived from a carboxylic acid not containing a hydroxyl group or with a hydrogen atom can also be used, and as such a hydroxyl carboxylic acid ester, those obtained by a conventionally known method can also be used.

In the present invention, these plasticizers may be used solely or may be used in combination of two or more thereof :

In the case where the plasticizer is contained in the layer B, from the viewpoints of compatibility with the resin (particularly, the polyvinyl acetal resin) to be used for the layer B together with the plasticizer, low migration properties into other layer, and enhancement of non-migration properties, it is preferred to use an ester-based plasticizer or an ether-based plasticizer, each of which has a melting point of 30°C or lower and a hydroxyl value of 15 mgKOH/g or more and 450 mgKOH/g or less, or an ester-based plasticizer or an ether-based plasticizer, each of which is amorphous and has a hydroxyl value of 15 mgKOH/g or more and 450 mgKOH/g or less. The term "amorphous" as referred to herein means that a melting point is not observed at a temperature of -20°C or higher. The hydroxyl value is preferably 15 mgKOH/g or more, more preferably 30 mgKOH/g or more, and optimally 45 mgKOH/g or more. In addition, the hydroxyl value is preferably 450 mgKOH/g or less, more preferably 360 mgKOH/g or less, and optimally 280 mgKOH/g or less. Examples of the ester-based plasticizer include polyesters satisfying the above-described prescriptions (e.g., the above-described carboxylic acid polyester-based plasticizer and carbonic acid polyester-based plasticizers, etc.) and hydroxycarboxylic acid ester compounds (e.g., the above-described hydroxycarboxylic acid ester-based plasticizers, etc.), and examples of the ether-based plasticizer include polyether compounds satisfying the above-described prescriptions (e.g., the above-described polyalkylene glycol-based plasticizers, etc.).

A content of the plasticizer is preferably 50 parts by mass or less, more preferably 40 parts by mass or less, still more preferably 30 parts by mass or less, and especially preferably 20 parts by mass or less based on 100 parts by mass of the thermoplastic resin, such as the polyvinyl acetal resin, etc. When the content of the plasticizer is more than 50 parts by mass based on 100 parts by mass of the thermoplastic resin, such as the polyvinyl acetal resin, etc., the shear storage modulus tends to be lowered. In addition, two or more plasticizers may also be used in combination.

A compound having a hydroxyl group can be used as the plasticizer. A proportion of the content of the compound having a hydroxyl group relative to the total amount of the plasticizer to be used in the layer B is preferably 50% by mass or more, more preferably 70% by mass or more, and still more preferably 90% by mass or more. The compound having a hydroxyl group has high compatibility with the polyvinyl acetal resin and is low in migration properties into other resin layer, and hence, the compound having a hydroxyl group can be suitably used.

In addition, in order to control the adhesion of the interlayer film for laminated glass to a glass or the like, an adhesive force adjustor and/or an additive of every kind for adjusting the adhesion may also be added, if desired.

As the adhesive force adjustor and/or the additive of every kind for adjusting the adhesion, for example, those disclosed in WO 03/033583A can be used; alkali metal salts and alkaline earth metal salts are preferably used; and examples thereof include salts of potassium, sodium, magnesium, and the like. Examples of the salt include salts of organic acids, such as octanoic acid, hexanoic acid, butyric acid, acetic acid, formic acid, etc. ; inorganic acids, such as hydrochloric acid, nitric acid, etc.; and the like.

Though an optimal addition amount of the adhesive force adjustor and/or the additive of every kind for adjusting the adhesion varies with the additive to be used, it is preferably adjusted in such a manner that an adhesive force of the resulting interlayer film for laminated glass to a glass is generally adjusted to 3 or more and 10 or less in a pummel test (described in WO 03/033583A or the like). In particular, in the case where high penetration resistance is required, the addition amount of the adhesive force adjustor and/or the additive of every kind for adjusting the adhesion is more preferably adjusted in such a manner that the adhesive force is 3 or more and 6 or less, whereas in the case where high glass scattering preventing properties are required, the addition amount of the adhesive force adjustor and/or the additive of every kind for adjusting the adhesion is more preferably adjusted in such a manner that the adhesive force is 7 or more and 10 or less. In the case where high glass scattering preventing properties are required, it is also a useful method that the adhesive force adjustor is not added.

### [Interlayer film for laminated glass]

As described above, the interlayer film for laminated glass of the present invention is an interlayer film for laminated glass having a sound insulting layer (layer A) and thermoplastic resin layers containing a thermoplastic resin (layers B), the sound insulating layer (layer A) being located between at least two of the thermoplastic resin layers (layers B).

In general, in the edge side of the laminated glass, when water, such as moisture, etc., penetrates into an interface between the external layer and the glass, the edge side of the laminated glass is whitened. Meanwhile, when the interlayer film for laminated glass having a three-layer constitution, in which a thermoplastic resin layer with high adhesion to a glass is an external layer, is used as an interlayer film for laminated glass, the adhesion between the interlayer film for laminated glass and the glass becomes good, so that the whitening in the edge side of the laminated glass can be suppressed. The interlayer film for laminated glass of the present invention is hereunder described in detail.

A film thickness of the layer A is preferably 20 µm or more, more preferably 30 µm or more, and still more preferably 50 µm or more. In addition, the film thickness of the layer A is preferably 400 µm or less, more preferably 350 µm or less, and still more preferably 300 µm or less. When the film thickness of the layer A is less than 20 µm, the sound insulating properties tend to be lowered, whereas when the film thickness of the layer A is more than 400 µm, there is a tendency that when a laminated glass is prepared, mechanical characteristics, such as penetration resistance, etc., are deteriorated, so that a safety performance as a laminated glass is impaired. In the case where a plurality of the layers A is included in the interlayer film for laminated glass of the present invention, it is preferred that a total thickness of the entirety of the layer A satisfies the foregoing range.

A film thickness of the layer B is preferably 100 µm or more, more preferably 150 µm or more, and still more preferably 200 µm or more. The film thickness of the layer B is preferably 750 µm or less, more preferably 650 µm or less, and still more preferably 550 µm or less. When the film thickness of the layer B is less than 100 µm, there is a tendency that the bending rigidity of the interlayer film for laminated glass is small, so that the sound insulating properties in a high-frequency region are lowered, whereas when the film thickness of the layer B is more than 750 µm, the sound insulating properties tend to be lowered regardless of the frequency region.

A ratio of the total thickness of the layer A to the total thickness of the layer B ((total thickness of the layer A) / (total thickness of the layer B)) is preferably 1/1 or less, more preferably 1/1.5 or less, and still more preferably 1/2 or less. The ratio of the total thickness of the layer A to the total thickness of the layer B is preferably 1/30 or more, more preferably 1/15 or more, still more preferably 1/8 or more, and especially preferably 1/6.5 or more. When the above-described ratio is smaller than 1/30, the sound insulating effect of the interlayer film for laminated glass tends to become small. On the other hand, when the above-described ratio is more than 1/1, there is a tendency that the bending rigidity of the interlayer film for laminated glass becomes small, so that the sound insulating properties in a high-frequency region are lowered.

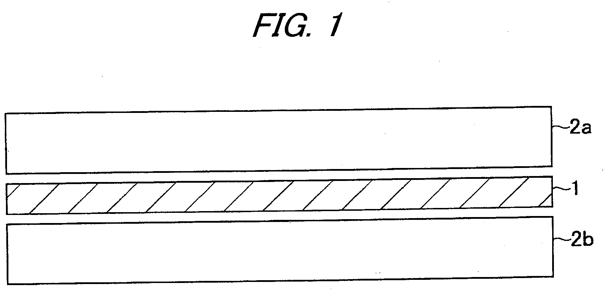

As shown in FIG. 1, the interlayer film for laminated glass in the present embodiment has a lamination constitution in which a layer A 1 is interposed by a layer B 2a and a layer B 2b. Though the lamination constitution in the interlayer film for laminated glass is determined depending upon the purpose, it may be, in addition to the lamination constitution of (layer B)/(layer A)/(layer B), a lamination constitution of (layer B)/(layer A)/(layer B)/(layer A), or (layer B)/(layer A)/(layer B)/(layer A)/(layer B). When the lamination constitution is a two-layer constitution as in (layer A)/(layer B), the sound insulating properties or bending strength of the interlayer film for laminated glass tends to be lowered. It is to be noted that it is preferred that at least one of the outermost layers is the layer B; and that it is more preferred that both of the outermost layers are the layer B.

One or more layers may also be included as other layer (referred to as "layer C") than the layers A and B. For example, lamination constitutions, such as (layer B)/(layer A)/(layer C)/(layer B), (layer B)/(layer A)/(layer B)/(layer C), (layer B)/(layer C)/(layer A)/(layer C)/(layer B), (layer B)/(layer C)/(layer A)/(layer B)/(layer C), (layer B)/(layer A)/(layer C)/(layer B)/(layer C), (layer C)/(layer B)/(layer A)/(layer B)/(layer C), (layer C)/(layer B)/(layer A)/(layer C)/(layer B)/(layer C), (layer C)/(layer B)/(layer C)/(layer A)/(layer C)/(layer B)/(layer C), etc., may be adopted. In addition, in the above-described lamination constitution, the components in the layer C may be identical with or different from each other. This is also applicable to the components in the layer A or the layer B. It is to be noted that it is preferred that at least one of the outermost layers is the layer B; and that it is more preferred that both of the outermost layers are the layer B.

It is to be noted that a layer composed of a known resin is usable as the layer C. For example, polyethylene, polypropylene, polyvinyl chloride, polystyrene, polyvinyl acetate, polyurethane, polytetrafluoroethylene, an acrylic resin, a polyamide, a polyacetal, a polycarbonate, a polyester inclusive of polyethylene terephthalate and polybutylene terephthalate, a cyclic polyolefin, polyphenylene sulfide, polytetrafluoroethylene, a polysulfone, a polyether sulfone, a polyarylate, a liquid crystal polymer, a polyimide, and the like can be used. In addition, in the layer C, a plasticizer, an antioxidant, an ultraviolet ray absorber, a photostabilizer, an adhesive force adjustor and/or an additive of every kind for adjusting the adhesion, an antiblocking agent, a pigment, a dye, a heat insulating material (for example, an inorganic heat insulating fine particle or an organic heat insulating material each having infrared absorption ability), and the like may also be added, if desired. As those additives, the same materials which may be contained in the layer A or the layer B are used.

A production method of the interlayer film for laminated glass of the present invention is not particularly limited, the interlayer film for laminated glass may be produced by a method in which after uniformly kneading the resin composition constituting the layer B, the layer B is prepared by a known film formation method, such as an extrusion method, a calender method, a pressing method, a casting method, an inflation method, etc., the layer A is prepared with the elastomer by the same method, these layers may be laminated by means of press molding or the like, or the layer B, the layer A, and other necessary layer may be molded by a co-extrusion method.

Among the known film formation methods, in particular, a method of producing an interlayer film for laminated glass using an extrusion machine is suitably adopted. A resin temperature at the time of extrusion is preferably 150°C or higher, and more preferably 170°C or higher. In addition, the resin temperature at the time of extrusion is preferably 250°C or lower, and more preferably 230°C or lower. When the resin temperature is too high, there is a concern that the used resin causes decomposition, thereby deteriorating the resin. Conversely, when the temperature is too low, discharge from the extrusion machine is not stabilized, resulting in causing a mechanical trouble. In order to efficiently remove a volatile material, it is preferred to remove the volatile material by measure of pressure reduction from a vent port of the extrusion machine.

In addition, it is preferred that a concave and convex structure, such as a melt fracture, an embossing, etc., is formed on the surface of the interlayer film for laminated glass of the present invention by a conventionally known method. A shape of the melt fracture or embossing is not particularly limited, and those which are conventionally known can be adopted.

In addition, a total film thickness of the interlayer film for laminated glass is preferably 20 µm or more, and more preferably 100 µm or more. In addition, the total film thickness of the interlayer film for laminated glass is preferably 10,000 µm or less, and more preferably 3, 000 µm or less. When the film thickness of the interlayer film for laminated glass is too thin, there is a concern that in preparing a laminated glass, lamination cannot be achieved well. What the film thickness of the interlayer film for laminated glass is too thick results in an increase of the costs, and hence, such is not preferred.

### [Laminated glass]

By using the interlayer film for laminated glass of the present invention, a laminated glass which is excellent in sound insulating properties, particularly sound insulating properties in a high-frequency region can be obtained. In addition, by using the interlayer film for laminated glass of the present invention, a laminated glass which has excellent sound insulating properties and which even when used for a long period of time under sunlight, is able to suppress yellowing of an edge portion thereof can be obtained. For that reason, the interlayer film for laminated glass of the present invention can be suitably used for a windshield for automobile, a side glass for automobile, a sunroof for automobile, a rear glass for automobile or a glass for head-up display, and the like. In the case where the laminated glass including the constitution of the interlayer film for laminated glass of the present invention in the inside thereof is applied to a glass for head-up display, a cross-sectional shape of the interlayer film for laminated glass to be used is preferably a shape in which an end surface side of one side is thick, whereas an end surface side of the other side is thin. In that case, the cross-sectional shape may be a shape in which the whole is a wedge shape in such a manner that it becomes gradually thin from the end surface side of one side toward the end surface side of the other side, or may be a shape in which a part of the cross section is a wedge shape such that the thickness is identical until an arbitrary position between the end surface of one side and the end surface of the other side, and it becomes gradually thin from the foregoing arbitrary position toward the end surface of the other side.

In general, two sheets of glass are used for the laminated glass of the present invention. Though a thickness of the glass constituting the laminated glass of the present invention is not particularly limited, it is preferably 100 mm or less. In addition, since the interlayer film for laminated glass of the present invention is excellent in bending strength, even when a laminated glass is prepared by using a thin sheet glass having a thickness of 2. 8 mm or less, weight reduction of the laminated glass can be realized without impairing the strength of the laminated glass. From the viewpoint of weight reduction, with respect to the thickness of the glass, a thickness of at least one sheet of glass is preferably 2.8 mm or less, more preferably 2.5 mm or less, still more preferably 2.0 mm or less, and especially preferably 1.8 mm or less. In particular, by regulating a thickness of the glass of one side to 1.8 mm or more, regulating a thickness of the glass of the other side to 1.8 mm or less, and regulating a difference in thickness between the respective glasses to 0.2 mm or more, a laminated glass in which thinning and weight reduction have been realized without impairing the bending strength can be prepared. The difference in thickness between the respective glasses is preferably 0.5 mm or more.

In a laminated glass obtained by interposing the interlayer film for laminated glass of the present invention by two sheets of float glass and a laminated glass after a moist heat resistance test (test of holding a test sample for 1,000 hours under conditions at 80°C and at a relative humidity of 95%), in the case of measuring a haze of a central portion of the laminated glass in accordance with JIS K 7105, an increase of the haze after the moist heat resistance test relative to the haze before the moist heat resistance test is 2% or less, preferably 1.5% or less, and more preferably 1.3% or less. In a product in which the increase of the haze after the moist heat resistance test relative to the haze before the moist heat resistance test is more than 2%, when allowed to stand in a moist heat environment for a long period of time, the appearance becomes inferior, and hence, such is not preferred. It is to be noted that in the test of the present invention, a float glass having a length of 50 mm, a width of 50 mm, and a thickness of 1. 9 mm is in general used as the above-described float glass.

As a method of preparing an interlayer film for laminated glass in which the increase of the haze after the moist heat resistance test relative to the haze before the moist heat resistance test is 2% or less, there is, for example, exemplified a method of using an interlayer film for laminated glass in which a sound insulating layer is interposed between two thermoplastic resin layers, or the like. In addition, as a more preferred method, there is exemplified a method of using an interlayer film for laminated glass in which a sound insulating layer using a thermoplastic elastomer having an aromatic vinyl polymer block and an aliphatic unsaturated hydrocarbon polymer block is interposed between two thermoplastic resin layers using a polyvinyl acetal resin or an ionomer.

Furthermore, in the laminated glass after the moist heat resistance test, a distance of whitening from the edge side is 4 mm or less, preferably 3.5 mm or less, and more preferably 3 mm or less. In the laminated glass after the moist heat resistance test, in a product in which the distance of whitening from the edge side is more than 4 mm, when allowed to stand in a moist heat environment for a long period of time, the edge side is whitened, and hence, such is not preferred.

In the laminated glass after the moist heat rest, as a method of preparing an interlayer film for laminated glass in which the distance of whitening from the edge side is 4 mm or less, there is, for example, exemplified a method of using an interlayer film for laminated glass in which a sound insulating layer is interposed between two thermoplastic resin layers. In addition, more preferably, there is exemplified a method of using an interlayer film for laminated glass in which a sound insulating layer using a thermoplastic elastomer having an aromatic vinyl polymer block and an aliphatic unsaturated hydrocarbon polymer block is interposed between two thermoplastic resin layers using a polyvinyl acetal resin or an ionomer.

In the interlayer film for laminated glass of the present invention, with respect to a laminated glass obtained by interposing the interlayer film for laminated glass by two sheets of float glass, in a state where the laminated glass is placed such that in a positional relation in which a plane of the laminated glass including the center in a longitudinal direction thereof includes the center in a width direction of a cylindrical xenon lamp, and a plane of the laminated glass including the center in a thickness direction thereof includes the center in a length direction of the cylindrical xenon lamp, its shortest distance to the cylindrical xenon lamp is 29 cm, when a weather resistance test of holding the laminated glass for 1,000 hours is conducted while irradiating an edge portion thereof with ultraviolet rays at a luminance of the xenon lamp of 180 W/m² under conditions at a relative humidity of 50% and a black panel temperature of 63°C, in measuring a YI (yellow index) of the laminated glass before holding and a YI of the laminated glass after holding on the basis of JIS K 7373, an increase of the YI of the laminated glass after holding relative to the YI of the laminated glass before holding is preferably 3 or less, more preferably 2.85 or less, and still more preferably 2.7 or less. In a product in which the increase of the YI of the laminated glass after the weather resistance test relative to the YI of the laminated glass before the weather resistance test is more than 3, there is a tendency that when allowed to stand for a long period of time under sunlight, the edge portion is liable to be yellowed. It is to be noted that in the above-described test to be carried out with respect to the present invention, a float glass having a length of 70 mm, a width of 5 mm, and a thickness of 1.9 mm is in general used as the above-described float glass.

As a method of preparing an interlayer film for laminated glass in which the increase of the YI of the laminated glass after the weather resistance test relative to the YI of the laminated glass before the weather resistance test is 3 or less, there is, for example, exemplified a method of using an interlayer film for laminated glass in which a sound insulating layer is interposed between tow thermoplastic resin layers. In addition, as a more preferred method, there is exemplified a method of using an interlayer film for laminated glass in which a sound insulating layer using a thermoplastic elastomer having an aromatic vinyl polymer block and an aliphatic unsaturated hydrocarbon polymer block is interposed between two thermoplastic resin layers using a polyvinyl acetal resin or an ionomer. As a still more preferred method, there is exemplified a method of using a thermoplastic elastomer having a content of a hard segment (for example, an aromatic vinyl polymer block) of 5% by mass or more and 40% by mass or less for the layer A.

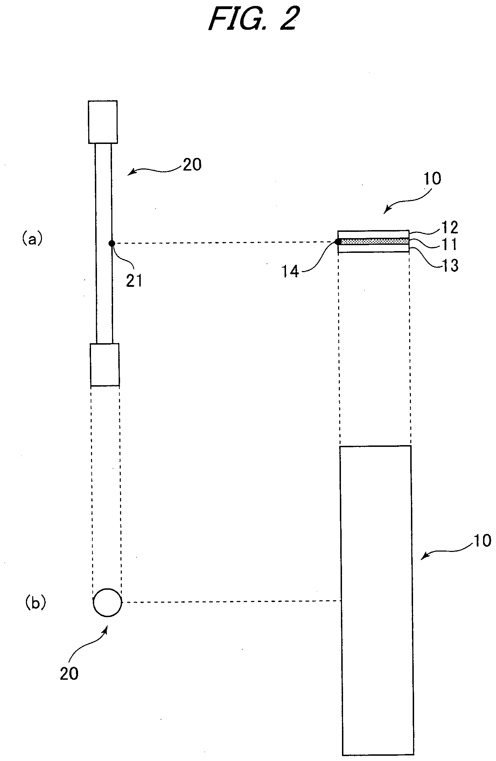

Here, a positional relation between a laminated glass 10 and a xenon lamp 20 in a weather resistance test is shown in FIG. 2. As described above, the laminated glass 10 is constituted so as to interpose an interlayer film 11 for laminated glass by two sheets of glasses 12 and 13.

The center in a longitudinal direction of the laminated glass 10 means a cross section including a middle point (point of 35 mm from the transverse side) in the longitudinal direction of the laminated glass 10 and vertical to the laminated glass 10. The center in a width direction of the cylindrical xenon lamp 20 means a center line extending in a length direction of the xenon lamp 20. The center in a thickness direction of the laminated glass 10 means a cross section including a middle point (center in a thickness direction of the sound insulating layer) in a thickness direction of the laminated glass 10 and parallel to the laminated glass 10. The center in a length direction of the cylindrical xenon lamp 20 means a circular cross section to be divided by a middle point in a length direction of the xenon lamp 20.

In FIG. 2, a shortest distance to the cylindrical xenon lamp 20 means a length of a line segment joining an edge point 14 of the laminated glass 10 and an edge point 21 of the xenon lamp 20. The edge point 14 of the laminated glass 10 is a point closest to the xenon lamp 20 in the line segment including the center in a longitudinal direction and the center in a thickness direction of the laminated glass 10. The edge point 21 of the xenon lamp 20 is a point closest to the laminated glass 10 in the circular cross section corresponding to the center in a length direction of the xenon lamp 20.

That is, the weather resistance test is conducted in a positional relation such that the laminated glass 10 and the cylindrical xenon lamp 20 are orthogonal to each other in a twisted positional relation, and that the line segment orthogonal to the edge portion of the laminated glass 10 and the cylindrical xenon lamp 20 is a segment joining the edge point 14 of the laminated glass 10 and the edge point 21 of the xenon lamp 20 in FIG. 2.

The loss factor at a tertiary resonance frequency can be, for example, measured by the following method. The interlayer film for laminated glass is interposed by two sheets of commercially available float glass, and a laminated glass is prepared by a vacuum bagging method (condition: the temperature is increased from 30°C to 160°C for 60 minutes, followed by holding at 160°C for 30 minutes). Thereafter, a central portion of the laminated glass is fixed to a tip portion of an exciting force detector built in an impedance head of an exciter of a mechanical impedance instrument, a vibration is given to the central portion of the laminated glass at 20°C and at a frequency in the range of from 0 to 10,000 Hz, and an exciting force and an acceleration waveform at this point are detected, thereby conducting a damping test of the laminated glass by a central exciting method. A mechanical impedance at an exciting point (the central portion of the laminated glass to which a vibration is given) is determined on the basis of the obtained exciting force and a speed signal obtained by integrating an acceleration single; and in an impedance curve obtained by setting the frequency on the abscissa and the mechanical impedance on the ordinate, respectively, the loss factor of the laminated glass at a tertiary resonance frequency can be determined from a frequency expressing a peak of the tertiary mode and a half-width value. It is to be noted that in the test of the present invention, a float glass having a length of 300 mm, a width of 25 mm, and a thickness of 1.9 mm is in general used as the above-described float glass.

In the interlayer film for laminated glass of the present invention, when the interlayer film for laminated glass is interposed by two sheets of float glass to prepare a laminated glass, a loss factor at a tertiary resonance frequency as measured at 20°C by a central exciting method is preferably 0. 2 or more, more preferably 0.3 or more, still more preferably 0.4 or more, and especially preferably 0.5 or more. When the loss factor at a tertiary resonance frequency is less than 0.2, the sound insulating properties of the laminated glass tend to be lowered.

As a method of preparing a laminated glass in which the loss factor restricted under the above-described conditions is 0.2 or more, there is, for example, exemplified a method of using an interlayer film for laminated glass in which a sound insulating layer is interposed between two thermoplastic resin layers. In addition, as a more preferred method, there is exemplified a method of using an interlayer film for laminated glass in which a sound insulating layer using a thermoplastic elastomer having an aromatic vinyl polymer block and an aliphatic unsaturated hydrocarbon polymer block is interposed between two thermoplastic resin layers using a polyvinyl acetal resin or an ionomer. Besides, as a preferred example, it is possible to achieve such by a method of using a material in which a content of the hard segment is a prescribed proportion or more (for example, 5% by mass or more, 10% by mass or more, 14% by mass or more, 15% by mass or more, or 17% by mass or more) relative to the thermoplastic elastomer constituting the sound insulating layer and regulating a ratio of the total thickness of the sound insulating layer (layer A) to the total thickness of the protective layer (layer B) of the interlayer film for laminated glass to a prescribed portion or more (for example, 1/30 or more, 1/15 or more, 1/8 or more or 1/6.5 or more), or other method.

In a laminated glass obtained by interposing the interlayer film for laminated glass of the present invention by two sheets of float glass and a laminated glass after a moist heat resistance test (test of holding a test sample for 1,000 hours under conditions at 80°C and at a relative humidity of 95%), in the case of measuring a loss factor at a tertiary resonance frequency at 20°C by a central exciting method, a decrease of the loss factor after the moist heat resistance test relative to the loss factor before the moist heat resistance test is preferably 0.05 or less, more preferably 0.04 or less, and still more preferably 0.03 or less. When the decrease of the loss factor after the moist heat resistance test relative to the loss factor before the moist heat resistance test is more than 0.05, in the case of using the laminated glass in a moist heat environment for a long period of time, the sound insulating properties tend to be lowered. In the above-described moist heat resistance test, a float glass having a length of 300 mm, a width of 25 mm, and a thickness of 1.9 mm is in general used, too.

As a method of preparing a laminated glass in which the decrease of the loss factor after the moist heat resistance test relative to the loss factor before the moist heat resistance test is 0.05 or less, there is, for example, exemplified a method of using, as the interlayer film for laminated glass, an interlayer film for laminated glass in which a sound insulating layer using a thermoplastic elastomer having an aromatic vinyl polymer block and an aliphatic unsaturated hydrocarbon polymer block is interposed between two thermoplastic resin layers using a polyvinyl acetal resin or an ionomer. In addition, as a more preferred method, there are exemplified a method of using a material in which the content of the hard segment is a prescribed proportion or more (for example, 14% by mass or more) relative to the thermoplastic elastomer constituting the sound insulating layer and regulating a ratio of the total thickness of the sound insulating layer (layer A) to the total thickness of the protective layer (layer B) of the interlayer film for laminated glass to a prescribed proportion or more (for example, 1/6.5 or more) ; a method of regulating a ratio of the total thickness of the sound insulating layer to the total thickness of the thermoplastic resin to a prescribed proportion or more (for example, 1/6.5 or more); and the like.

In the interlayer film for laminated glass of the present invention, the tertiary resonance frequency is preferably 1,250 Hz or more, more preferably 1,500 Hz or more, and still more preferably 1, 750 Hz or more. When the tertiary resonance frequency of the interlayer film for laminated glass is less than 1,250 Hz, a coincidence phenomenon is liable to be generated in a high-frequency region, so that the sound insulating properties in a high-frequency region tends to be lowered. In the interlayer film for laminated glass of the present invention, the tertiary resonance frequency is preferably 3,000 Hz or less, more preferably 2,750 Hz or less, and still more preferably 2,500 Hz or less. When the tertiary resonance frequency of the interlayer film for laminated glass is more than 3,000 Hz, a coincidence phenomenon is liable to be generated in a low-frequency region, so that the sound insulating properties in a low-frequency region tends to be lowered.

As a method of regulating the tertiary resonance frequency of the interlayer film for laminated glass to 1,250 Hz or more and 3,000 Hz or less, there is, for example, exemplified a method of using an interlayer film for laminated glass in which a sound insulating layer is interposed between two thermoplastic resin layers. In addition, more preferably, there is exemplified a method of using an interlayer film for laminated glass in which a sound insulating layer using a thermoplastic elastomer having an aromatic vinyl polymer block and an aliphatic unsaturated hydrocarbon polymer block is interposed between two thermoplastic resin layers using a polyvinyl acetal resin or an ionomer.

In the case where the laminated glass obtained by interposing the interlayer film for laminated glass of the present invention by two sheets of float glass contains a heat insulating material, a transmittance of a near infrared light having a wavelength of 1, 500 nm is preferably 50% or less, and more preferably 20% or less. When the transmittance of a near infrared light having a wavelength of 1, 500 nm is 50% or less, there is a tendency that a shield factor of infrared rays is high, so that a heat insulating performance of the laminated glass is improved. In the present invention, the float glass having a thickness of 1.9 mm per single sheet is in general used.

In the laminated glass of the present invention, a haze when the interlayer film for laminated glass is laminated between two sheets of float glass having a thickness of 2 mm is preferably less than 5, more preferably less than 3, and still more preferably less than 1.

### [Production method of laminated glass]

It is possible to produce the laminated glass of the present invention by a conventionally known method. Examples thereof include a method of using a vacuum laminator, a method of using a vacuum bag, a method of using a vacuum ring, a method of using a nip roll, and the like. In addition, a method in which after temporary contact bonding, the resultant is put into an autoclave process can also be supplementarily conducted.

In the case of using a vacuum laminator, for example, a known instrument which is used for production of a solar cell is used, and the assembly is laminated under a reduced pressure of 1 × 10⁻⁶ MPa or more and 3 × 10⁻² MPa or less at a temperature of 100°C or higher and 200°C or lower, and especially 130°C or higher and 170°C or lower. The method of using a vacuum bag or a vacuum ring is, for example, described in the specification of European Patent No. 1235683, and for example, the assembly is laminated under a pressure of about 2 × 10⁻² MPa at 130°C or higher and 145°C or lower.

With respect to the preparation method of a laminated glass, in the case of using a nip roll, for example, there is exemplified a method in which after conducting first temporary contact bonding at a temperature of a flow starting temperature of the polyvinyl acetal resin or lower, temporary contact bonding is further conducted under a condition close to the flow starting temperature. Specifically, for example, there is exemplified a method in which the assembly is heated at 30°C or higher and 100°C or lower by an infrared heater or the like, then deaerated by a roll, and further heated at 50°C or higher and 150°C or lower, followed by conducting contact bonding by a roll to achieve bonding or temporary bonding.

In addition, a laminated glass may also be prepared by gathering and laminating glasses in which the layer B is coated on the both surfaces of the layer A such that the constitution of the interlayer film for laminated glass of the present invention is included in the inside of the laminated glass.

Though the autoclave process which is supplementarily conducted after the temporary contact bonding is variable depending upon the thickness or constitution of a module, it is, for example, carried out under a pressure of 1 MPa or more and 15 MPa or less at a temperature of 120°C or higher and 160°C or lower for 0.5 hours or more and 2 hours or less.

The glass to be used on the occasion of preparing a laminated glass is not particularly limited, inorganic glasses, such as a float sheet glass, a polished sheet glass, a figured glass, a wired sheet glass, a heat-ray absorbing glass, etc., and besides, conventionally known organic glasses, such as polymethyl methacrylate, polycarbonate, etc., and the like can be used. These glasses may be any of colorless, colored, transparent, or non-transparent glasses. These glasses may be used solely, or may be used in combination of two or more thereof.

### EXAMPLES

The present invention is hereunder specifically described by reference to Examples and Comparative Examples, but it should not be construed that the present invention is limited to these Examples.

It is to be noted that in the following Examples and Comparative Examples, as a used polyvinyl butyral resin (PVB), one obtained by acetalizing polyvinyl alcohol having a viscosity average polymerization degree the same as the targeted viscosity average polymerization degree (viscosity average polymerization degree as measured in accordance with the "Testing Methods for Polyvinyl Alcohol" of JIS K 6726) with n-butyl aldehyde in the presence of a hydrochloric acid catalyst was used.

### (Example 1)

### (Preparation of layer A)

In a pressure-resistant vessel which had been purged with nitrogen and dried, 50 kg of cyclohexane as a solvent and 130 g of sec-butyllithium as an anionic polymerization initiator were charged, and 290 g of tetrahydrofuran as a Lewis base was charged (since the sec-butyllithium contains a 10.5% by mass cyclohexane solution, a substantial addition amount of sec-butyllithium is 13.9 g). After increasing the temperature within the pressure-resistant vessel to 50°C, 1.8 kg of styrene was added, and polymerization was conducted for one hour. Subsequently, 13.2 kg of isoprene was added, and polymerization was conducted for 2 hours; and 1.8 kg of styrene was further added, and polymerization was conducted for one hour, thereby obtaining a reaction solution containing a polystyrene-polyisoprene-polystyrene triblock copolymer.

To the reaction solution, a Ziegler-based hydrogenation catalyst formed of nickel octylate and trimethylaluminum was added in a hydrogen atmosphere, and the contents were allowed to react under conditions at a hydrogen pressure of 1 MPa and at 80°C for 5 hours. After allowing the resulting reaction solution to stand for cooling and pressure discharge, the catalyst was removed by water washing and dried in vacuo, thereby obtaining a hydrogenated product of a polystyrene-polyisoprene-polystyrene triblock copolymer (hereinafter referred to as "TPE-2"). 100 parts by mass of the resulting TPE-2 and 5 parts by mass of maleic anhydride-modified polypropylene (manufactured by Sanyo Chemical Industries, Ltd., UMEX 1010) as an adhesive force adjustor to a layer B were mixed and molded into a layer A having a thickness of 250 µm by an extrusion molding method.

### (Preparation of layer B)

As for a layer B, a composition in which 100 parts by mass of a polyvinyl butyral resin having a viscosity average polymerization degree of about 1,700, an average degree of acetalization of 70 mol%, and an average content of a vinyl acetate unit of 0.9 mol% (hereafter referred to as "PVB-a") was compounded with 15 parts by mass of a polyester polyol (manufactured by Kuraray Co., Ltd., KURARAY POLYOL P-510: poly[(3-methyl-1,5-pentanediol)-alt-(adipic acid)]) was molded into the layer B having a thickness of 250 µm by an extrusion molding method.

### (Preparation of interlayer film for laminated glass)

The layer A was interposed between two layers of the layer B and press molded at 150°C, thereby preparing an interlayer film for laminated glass composed of a composite film of a three-layer constitution and having a thickness of 0.75 mm.

### 1. Physical properties evaluation (calculation of residual amount of double bond derived from conjugated diene monomer unit)

An iodine value of the block copolymer obtained in Example 1 before and after the hydrogenation was measured, and the residual amount of the double bond was calculated from a measured value thereof. The calculation results of the residual amount of the double bond are shown in Table 1.

### 2. Physical properties evaluation (calculation of total value of contents of 1,2-bond and 3,4-bond in isoprene unit and content of 1,2-bond in butadiene unit)

50 mg of each of TPE-1 to TPE-4 obtained in the Examples was dissolved in deuterated chloroform and subjected to ¹H-NMR measurement. The contents of the 1,2-bond and the 3,4-bond in the isoprene unit and the content of the 1,2-bond in the butadiene unit were measured, respectively from peaks derived from the 1,2-bond and the 3,4-bond in the isoprene unit and a peak derived from the 1,2-bond in the butadiene unit in the resulting spectra.

The contents of the 1,2-bond and the 3,4-bond in the resulting isoprene unit and the content of the 1,2-blond in the resulting butadiene unit were totalized, thereby calculating a total value of the contents of the 1,2-bond and the 3,4-bond. The calculation results are shown in Table 1 or Table 2.

### 3. Physical properties evaluation (peak temperature and peak height of tan δ of layer A (thermoplastic elastomer))

A strain control type dynamic viscoelasticity instrument (manufactured by Rheomix, ARES) having a diameter of a disk of 8 mm was used as a parallel-plate oscillatory rheometer in accordance with JIS K 7244-10. The hydrogenated product of a polystyrene-polyisoprene-polystyrene triblock copolymer (TPE-2) as used in Example 1 was formed into a single-layer sheet (thickness: 0.76 mm) by an extrusion molding method. The single-layer sheet was cut out in a disk shape and used as a test sheet. A gap between two sheets of flat plate was completely filled by the test sheet, and the resultant was held at a temperature of 20°C and at a humidity of 60% RH for 24 hours or more. A vibration with a strain amount of 1.0% was given to the test sheet at a frequency of 1 Hz, and a measurement temperature was increased at a constant rate of 1°C/min from -40°C to 100°C. The temperatures of the test sheet and the disk were kept until measured values of shear loss modulus and shear storage modulus did not change. The measurement results of a peak temperature and a peak height of tan δ of the layer A (thermoplastic elastomer) are shown in Table 1.

### 4. Physical properties evaluation (tertiary resonance frequency, loss factor at tertiary resonance frequency, and loss factor after moist heat resistance test of laminated glass)

The interlayer film for laminated glass obtained in Example 1 was interposed by two sheets of commercially available float glass (300 mm in length × 25 mm in width × 1. 9 mm in thickness), and a laminated glass was prepared by a vacuum bagging method (condition: the temperature was increased from 30°C to 160°C for 60 minutes, followed by holding at 160°C for 30 minutes). Thereafter, a central portion of the laminated glass was fixed to a tip portion of an exciting force detector built in an impedance head of an exciter (power amplifier/model 371-A) of a mechanical impedance instrument (manufactured by Ono Sokki Co., Ltd., mass cancel amplifier: MA-5500, channel data station: DS-2100). A vibration was given at 20°C to the central portion of the laminated glass at a frequency in the range of from 0 to 10,000 Hz. An exciting force and an acceleration waveform in the central portion of this laminated glass were detected, thereby conducting a damping test of the laminated glass by a central exciting method. A mechanical impedance at an exciting point (the center of the laminated glass to which a vibration was given) was determined on the basis of the obtained exciting force and a speed signal obtained by integrating an acceleration single; and in an impedance curve obtained by setting the frequency on the abscissa and the mechanical impedance on the ordinate, respectively, a tertiary resonance frequency and a loss factor at a tertiary resonance frequency of the laminated glass were obtained from a frequency expressing a peak and a half-width value. In addition, the laminated glass was subjected to a moist heat resistance test (test of holding a test sample for 1,000 hours under conditions at a temperature of 80°C and at a relative humidity of 95%). Immediately after the moist heat resistance test, the above-described damping test was conducted, thereby obtaining a tertiary resonance frequency and a loss factor at a tertiary resonance frequency of the laminated glass. The measurement results of a tertiary resonance frequency, a loss factor before the moist heat resistance test, a loss factor after the moist heat resistance test, and a decrease of the loss factor are shown in Table 1.

### 5. Physical properties evaluation (evaluation of heat insulating properties of laminated glass)

The interlayer film for laminated glass obtained in Example 1 was interposed by two sheets of commercially available float glass (50 mm in length × 50 mm in width × 1.9 mm in thickness), and a laminated glass was prepared by a vacuum bagging method (condition: the temperature was increased from 30°C to 160°C for 60 minutes, followed by holding at 160°C for 30 minutes). Thereafter, a wavelength transmittance in ultraviolet, visible, and near-infrared regions was measured by using a spectral photometer U-4100 (manufactured by Hitachi High-Tech Science Corporation). It is to be noted that the measurement was conducted at a temperature of 20°C. The measurement results of a transmittance of a near-infrared light having a wavelength of 1,500 nm are shown in Table 1.

### 6. Physical properties evaluation (evaluation of haze and distance of whitening of laminated glass)

The interlayer film for laminated glass obtained in Example 1 was interposed by two sheets of commercially available float glass (50 mm in length × 50 mm in width × 1.9 mm in thickness), and a laminated glass was prepared by a vacuum bagging method (condition: the temperature was increased from 30°C to 160°C for 60 minutes, followed by holding at 160°C for 30 minutes). Thereafter, a haze of a central portion of the laminated glass was measured by using a haze meter HZ-1 (manufactured by Suga Test Instruments Co., Ltd.) in accordance with JIS K 7105. It is to be noted that the measurement was conducted at a temperature of 20°C. In addition, the laminated glass was subjected to a moist heat resistance test (test of holding a test sample for 1,000 hours under conditions at a temperature of 80°C and at a relative humidity of 95%). Immediately after the moist heat resistance test, a haze in the central portion of the laminated glass was measured by the same method as described above. Furthermore, a whitened state in the edge side of the laminated glass was also visually confirmed, thereby measuring a distance of whitening from the edge side of the laminated glass. The measurement results of a haze before the moist heat resistance test, a haze after the moist heat resistance test, an increase of the haze, and a distance of whitening after the moist heat resistance test are shown in Table 1.

### 7. Physical properties evaluation (evaluation of YI of laminated glass)

The interlayer film for laminated glass obtained in Example 1 was interposed by two sheets of commercially available float glass (70 mm in length × 5 mm in width × 1.9 mm in thickness), and a laminated glass was prepared by a vacuum bagging method (condition: the temperature was increased from 30°C to 160°C for 60 minutes, followed by holding at 160°C for 30 minutes). Thereafter, a YI of the laminated glass was measured at 20°C by using a color meter (manufactured by Suga Test Instruments Co., Ltd.) according to a transmittance measurement method in accordance with JIS K 7373.

As shown in FIG. 2, a laminated glass 10 was placed in a super xenon weather meter SX75 (manufactured by Suga Test Instruments Co., Ltd.) in such a manner that in a positional relation in which a plane of the laminated glass 10 including the center in a longitudinal direction thereof includes the center in a width direction of a cylindrical xenon lamp 20, and a plane of the laminated glass 10 including the center in a thickness direction thereof includes the center in a length direction of the cylindrical xenon lamp 20, its shortest distance to the cylindrical xenon lamp 20 (length of a line segment joining an edge point 14 and an edge point 21) is 29 cm.

Thereafter, a weather resistance test of holding the laminated glass for 1,000 hours was conducted while irradiating an edge portion thereof with ultraviolet rays at a luminance of the xenon lamp of 180 W/m² under conditions at a relative humidity of 50% and a black panel temperature of 63°C. Immediately after the weather resistance test, a YI of the laminated glass was measured by the same method as described above. The measurement results of a YI of the laminated glass before and after the weather resistance test and an increase of the YI are shown in Table 1.

### 8. Physical properties evaluation (evaluation of thermal creep resistance of laminated glass)

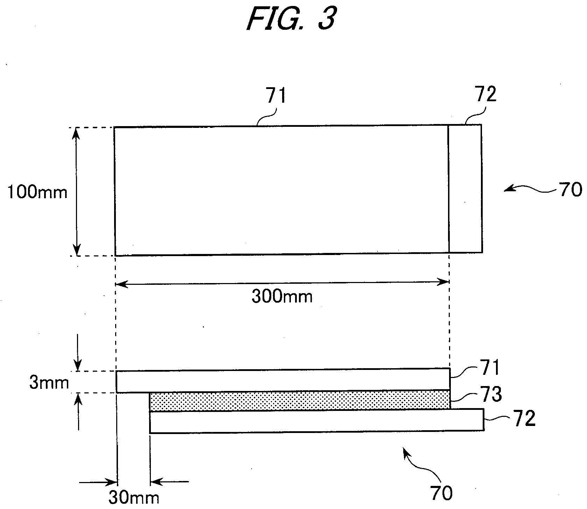

As shown in FIG. 3, an interlayer film 73 for laminated glass obtained in Example 1 was interposed by float glasses 71 and 72 each having a length of 300 mm, a width of 100 mm, and a thickness of 3 mm, and a laminated glass 70 was prepared by using a vacuum laminator (manufactured by Nisshinbo Mechatronics Inc., 1522N) under conditions, of hot plate temperature: 165°C, evacuation time: 12 minutes, pressing pressure: 50 kPa, and pressing time: 17 minutes.

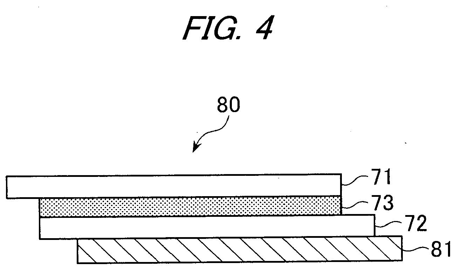

As shown in FIG. 4, a laminated glass 80 having an iron plate stuck thereonto was prepared by sticking an iron plate 81 having a weight of 1 kg onto one side of the glass 72 by using an instant adhesive.

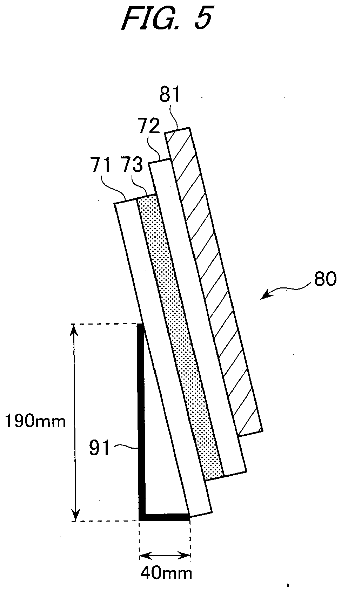

As shown in FIG. 5, the laminated glass 80 was leaned against a stand 91 and allowed to stand within a chamber at 100°C for one week. After standing, a distance at which the glass 72 slipped down was measured, the distance was evaluated according to the following criteria, and the evaluation was made as an evaluation of thermal creep resistance. The evaluation results are shown in Table 1.

### <Evaluation criteria>

A: The slip down distance of the glass 72 is 1 mm or less.
B: The slip down distance of the glass 72 is more than 1 mm.

### (Example 2)

An interlayer film for laminated glass and a laminated glass were prepared by the same method as in Example 1, except that in the layer B, the polyester polyol was used in an amount of 25 parts by mass in place of 15 parts by mass, and then subjected to the various physical properties evaluations. The results of the various physical properties evaluations are shown in Table 1.

### (Example 3)

An interlayer film for laminated glass and a laminated glass were prepared by the same method as in Example 1, except that in the layer B, the polyester polyol was used in an amount of 40 parts by mass in place of 15 parts by mass, and then subjected to the various physical properties evaluations. The results of the various physical properties evaluations are shown in Table 1.

### (Example 4)

In a pressure-resistant vessel which had been purged with nitrogen and dried, 50 kg of cyclohexane as a solvent and 76 g of sec-butyllithium as an anionic polymerization initiator were charged, and 313 g of tetrahydrofuran as a Lewis base was charged (since the sec-butyllithium contains a 10.5% by mass cyclohexane solution, a substantial addition amount of sec-butyllithium is 8.0 g). After increasing the temperature within the pressure-resistant vessel to 50°C, 0.5 kg of styrene was added, and polymerization was conducted for one hour. Subsequently, a mixed solution composed of 8.2 kg of isoprene and 6.5 kg of butadiene was added, and polymerization was conducted for 2 hours; and 1.5 kg of styrene was further added, and polymerization was conducted for one hour, thereby obtaining a reaction solution containing a polystyrene-poly(isoprene/butadiene)-polystyrene triblock copolymer.

To the reaction solution, a Ziegler-based hydrogenation catalyst formed of nickel octylate and trimethylaluminum was added in a hydrogen atmosphere, and the contents were allowed to react under conditions at a hydrogen pressure of 1 MPa and at 80°C for 5 hours. After allowing the resulting reaction solution to stand for cooling and pressure discharge, the catalyst was removed by water washing and dried in vacuo, thereby obtaining a hydrogenated product of the polystyrene-poly(isoprene/butadiene)-polystyrene triblock copolymer (hereinafter referred to as "TPE-1"). Subsequently, TPE-1 and TPE-2 were melt kneaded in a mass ratio of 1/1 at 200°C, thereby obtaining TPE-3.

An interlayer film for laminated glass and a laminated glass were prepared by the same method as in Example 1, except that as the layer A, TPE-3 was used in place of TPE-2, and then subjected to the various physical properties evaluations. The results of the various physical properties evaluations are shown in Table 1.

### (Example 5)

An interlayer film for laminated glass and a laminated glass were prepared by the same method as in Example 4, except that the film thickness of the layer A was changed to 100 µm, and that the film thickness of the layer B was changed to 325 µm, and then subjected to the various physical properties evaluations. The results of the various physical properties evaluations are shown in Table 1.

### (Example 6)

An interlayer film for laminated glass and a laminated glass were prepared by the same method as in Example 1, except that as the layer A, TPE-1 was used in place of TPE-2, and then subjected to the various physical properties evaluations. The results of the various physical properties evaluations are shown in Table 1.

### (Example 7)

An interlayer film for laminated glass and a laminated glass were prepared by the same method as in Example 6, except that the film thickness of the layer A was changed to 100 µm, and that the film thickness of the layer B was changed to 325 µm, and then subjected to the various physical properties evaluations. The results of the various physical properties evaluations are shown in Table 1.

### (Example 8)

An interlayer film for laminated glass and a laminated glass were prepared by the same method as in Example 1, except that the film thickness of the layer A was changed to 380 µm, and that the film thickness of the layer B was changed to 190 µm, and then subjected to the various physical properties evaluations. The results of the various physical properties evaluations are shown in Table 1.

### (Example 9)

An interlayer film for laminated glass and a laminated glass were prepared by the same method as in Example 6, except that in the hydrogenation treatment on the block copolymer to be used for the layer A, the hydrogen pressure was changed to 10 MPa in place of setting the hydrogen pressure to 1 MPa, thereby obtaining a hydrogenated product having a residual amount of the double bond of 1 mol% (hereinafter referred to as "TPE-4"), and then subjected to the various physical properties evaluations. The results of the various physical properties evaluations are shown in Table 1.

**[Table 1]**

| | | Example 1 | Example 2 | Example 3 | Example 4 | Example 5 | Example 6 | Example 7 | Example 8 | Example 9 |
|---|---|---|---|---|---|---|---|---|---|---|
| LayerA | Kind | TPE-2 | TPE-2 | TPE-2 | TPE-3 | TPE-3 | TPE-1 | TPE-1 | TPE-2 | TPE-4 |
| | Content of polymer block (a) (% by mass) | 20 | 20 | 20 | 16 | 16 | 12 | 12 | 20 | 12 |
| | Content of polymer block (b) (% by mass) | 80 | 80 | 80 | 84 | 84 | 88 | 88 | 80 | 88 |
| | Mass ratio of monomer of polymer block (b) | Ip=100 | Ip=100 | Ip=100 | Ip:Bd= 77.5:22.5 | Ip:Bd= 77.5:22.5 | Ip:Bd= 55:45 | Ip:Bd= 55:45 | Ip=100 | Ip:Bd= 55:45 |
| | Sum total of 1,2-bond and 3,4-bond (mol%) | 55 | 55 | 55 | 57.5 | 57.5 | 60 | 60 | 55 | 60 |
| | Residual amount of double bond (mol%). | 12.0 | 12.0 | 12.0 | 10.3 | 10.3 | 8.5 | 8.5 | 12.0 | 1 |
| | Peak temperature of tan δ (°C) | -5.2 | -5.2 | -5.2 | -15.2 | -15.2 | -22.6 | -22.6 | -5.2 | -22.6 |
| | Peak height of tan δ | 1.89 | 1.89 | 1.89 | 1.91 | 1.91 | 1.92 | 1.92 | 1.89 | 1.92 |
| | Content of adhesive force adjustor (parts by mass) | 5 | 5 | 5 | 5 | 5 | 5 | 5 | 5 | 5 |
| Layer B | Kind | PVB-a | PVB-a | PVB-a | PVB-a | PVB-a | PVB-a | PVB-a | PVB-a | PVB-a |
| | Viscosity average polymerization degree | 1700 | 1700 | 1700 | 1700 | 1700 | 1700 | 1700 | 1700 | 1700 |
| | Average degree of acetalization (mol%) | 70 | 70 | 70 | 70 | 70 | 70 | 70 | 70 | 70 |
| | Kind of plasticizer | P-510 | P-510 | P-510 | P-510 | P-510 | P-510 | P-510 | P-510 | P-510 |
| | Content of plasticizer (parts by mass) | 15 | 25 | 40 | 15 | 15 | 15 | 15 | 15 | 15 |
| | Sum total of thickness of layer A and thickness of layer B | 1/2 | 1/2 | 1/2 | 1/2 | 1/6.5 | 1/2 | 1/6.5 | 1/1 | 1/2 |
| | Transmittance [at 1,500 nm] (%) | 75 | 76 | 75 | 76 | 75 | 76 | 74 | 77 | 76 |
| | Tertiary resonance frequency (Hz) | 2106 | 1816 | 1821 | 1895 | 2254 | 1355 | 1821 | 1995 | 1352 |
| | Loss factor before moist heat resistance test | 0.46 | 0.57 | 0.52 | 0.33 | 0.26 | 0.29 | 0.28 | 0.40 | 0.28 |
| | Loss factor after moist heat resistance test | 0.45 | 0.54 | 0.48 | 0.29 | 0.21 | 0.27 | 0.25 | 0.35 | 0.27 |
| Laminated glass B/A/B | Decrease of loss factor | 0.01 | 0.03 | 0.04 | 0.04 | 0.05 | 0.02 | 0.03 | 0.05 | 0.01 |
| | Haze before moist heat resistance test [%] | 0.9 | 0.9 | 0.8 | 0.9 | 1.0 | 0.8 | 1.1 | 0.6 | 0.8 |
| | Haze after moist heat resistance test [%] | 2.0 | 1.6 | 1.5 | 1.8 | 2.2 | 1.9 | 2.3 | 1.4 | 2.0 |
| | Increase of haze | 1.1 | 0.7 | 0.7 | 0.9 | 1.2 | 1.1 | 1.2 | 0.8 | 1.2 |
| | Distance of whitening after moist heat resistance test [mm] | 3 | 1 | 1 | 3 | 2 | 2 | 4 | 3 | 2 |
| | YI before weather resistance test | 1.20 | 1.08 | 0.99 | 1.18 | 1.43 | 1.17 | 1.35 | 0.92 | 1.08 |
| | YI after weather resistance test | 3.92 | 3.92 | 3.88 | 3.71 | 4.38 | 3.73 | 4.26 | 3.65 | 1.93 |
| | Increase of YI | 2.72 | 2.84 | 2.89 | 2.53 | 2.95 | 2.56 | 2.91 | 2.73 | 0.85 |
| | Thermal creep resistance | A | A | A | A | A | A | A | A | B |

| | | | | | | | | | | |
|---|---|---|---|---|---|---|---|---|---|---|
| * Ip: Isoprene unit, Bd: Butadiene unit * P-510: Polyester polyol * The content of the adhesive force adjustor expresses an amount based on 100 parts by mass of the thermoplastic elastomer, and the content of the plasticizer expresses an amount based on 100 parts by mass of polyvinyl butyral. | | | | | | | | | | |

### (Example 10)

An interlayer film for laminated glass and a laminated glass were prepared by the same method as in Example 1, except that the adhesive force adjustor was not used for the layer A, and that an ionomer film having a thickness of 250 µm (manufactured by E. I. du Pont de Nemours and Company, SentryGlas® Interlayer) was used for the layer B in place of the composition of PVB and the polyester polyol as molded in a thickness of 250 µm, and then subjected to the various physical properties evaluations. The results of the various physical properties evaluations are shown in Table 2.

### (Example 11)

An interlayer film for laminated glass and a laminated glass were prepared by the same method as in Example 10, except that as the layer A, TPE-3 was used in place of TPE-2, and then subjected to the various physical properties evaluations. The results of the various physical properties evaluations are shown in Table 2.

### (Example 12)

An interlayer film for laminated glass and a laminated glass were prepared by the same method as in Example 11, except that the film thickness of the layer A was changed to 100 µm, and that the film thickness of the layer B was changed to 325 µm, and then subjected to the various physical properties evaluations. The results of the various physical properties evaluations are shown in Table 2.

### (Example 13)

An interlayer film for laminated glass and a laminated glass were prepared by the same method as in Example 10, except that as the layer A, TPE-1 was used in place of TPE-2, and then subjected to the various physical properties evaluations. The results of the various physical properties evaluations are shown in Table 2.

### (Example 14)

An interlayer film for laminated glass and a laminated glass were prepared by the same method as in Example 13, except that the film thickness of the layer A was changed to 100 µm, and that the film thickness of the layer B was changed to 325 µm, and then subjected to the various physical properties evaluations. The results of the various physical properties evaluations are shown in Table 2.

### (Example 15)

An interlayer film for laminated glass and a laminated glass were prepared by the same method as in Example 10, except that the film thickness of the layer A was changed to 380 µm, and that the film thickness of the layer B was changed to 190 µm, and then subjected to the various physical properties evaluations. The results of the various physical properties evaluations are shown in Table 2.

### (Example 16)

An interlayer film for laminated glass and a laminated glass were prepared by the same method as in Example 1, except that in the layer A, 0.75 parts by mass of cesium-doped tungsten oxide (manufactured by Sumitomo Metal Mining Co., Ltd., YMDS-874) was added to 100 parts by mass of TPE-2, and then subjected to the various physical properties evaluations. The results of the various physical properties evaluations are shown in Table 2.

**[Table 2]**

| | | Example 10 | Example 11 | Example 12 | Example 13 | Example 14 | Example 15 | Example 16 |
|---|---|---|---|---|---|---|---|---|
| Layer A | Kind | TPE-2 | TPE-3 | TPE-3 | TPE-1 | TPE-1 | TPE-2 | TPE-2 |
| | Content of polymer block (a) (% by mass) | 20 | 16 | 16 | 12 | 12 | 20 | 20 |
| | Content of polymer block (b) (% by mass) | 80 | 84 | 84 | 88 | 88 | 80 | 80 |
| | Mass ratio of monomer of polymer block (b) | Ip=100 | Ip:Bd= 77.5:22.5 | Ip:Bd= 77.5:22.5 | Ip:Bd= 55:45 | Ip:Bd= 55:45 | Ip=100 | Ip=100 |
| | Sum total of 1,2-bond and 3,4-bond (mol%) | 55 | 57.5 | 57.5 | 60 | 60 | 55 | 55 |
| | Residual amount of double bond (mol%) | 12.0 | 10.3 | 10.3 | 8.5 | 8.5 | 12.0 | 12.0 |
| | Peak temperature of tan δ (°C) | -5.2 | -15.2 | -15.2 | -22.6 | -22.6 | -5.2 | -5.2 |
| | Peak height of tan δ | 1.89 | 1.91 | 1.91 | 1.92 | 1.92 | 1.89 | 1.89 |
| | Content of adhesive force adjustor (parts by mass) | - | - | - | - | - | - | 5 |
| Layer B | Kind | Ionomer | Ionomer | Ionomer | Ionomer | Ionomer | Ionomer | PVB-a |
| | Viscosity averaqe polymerization degree | - | - | - | - | - | - | 1700 |
| | Average degree of acetalization (mol%) | - | - | - | - | - | - | 70 |
| | Kind of plasticizer | - | - | - | - | - | - | P-510 |
| | Content of plasticizer (parts by mass) | - | - | - | - | - | - | 15 |
| | Sum total of thickness of layer A and thickness of layer B | 1/2 | 1/2 | 1/6.5 | 1/2 | 1/6.5 | 1/1 | 1/2 |
| | Transmittance [at 1,500 nm] (%) | 77 | 76 | 78 | 76 | 78 | 76 | 40 |
| | Tertiary resonance frequency (Hz) | 2000 | 1816 | 2157 | 1322 | 1536 | 1907 | 2099 |
| | Loss factor before moist heat resistance test | 0.46 | 0.35 | 0.27 | 0.20 | 0.36 | 0.38 | 0.45 |
| Laminated glass B/A/B | Loss factor after moist heat resistance test | 0.45 | 0.33 | 0.27 | 0.19 | 0.35 | 0.36 | 0.43 |
| | Decrease of loss factor | 0.01 | 0.02 | 0.00 | 0.01 | 0.01 | 0.02 | 0.02 |
| | Haze before moist heat resistance test [%] | 0.8 | 0.7 | 0.6 | 0.7 | 0.5 | 0.9 | 1.5 |
| | Haze after moist heat resistance test [%] | 1.5 | 1.6 | 1.5 | 1.4 | 1.4 | 1.9 | 2.8 |
| | Increase of haze | 0.7 | 0.9 | 0.9 | 0.7 | 0.9 | 1.0 | 1.3 |
| | Distance of whitening after moist heat resistance test [mm] | 2 | 2 | 1 | 1 | 1 | 3 | 3 |
| | YI before weather resistance test | 0.79 | 0.77 | 0.88 | 0.81 | 0.89 | 0.79 | 0.65 |
| | YI after weather resistance test | 1.75 | 1.52 | 1.49 | 1.52 | 1.43 | 1.68 | 1.23 |
| | Increase of YI | 0.96 | 0.75 | 0.61 | 0.71 | 0.54 | 0.89 | 0.58 |
| | Thermal creep resistance | A | A | A | A | A | A | A |

| | | | | | | | | |
|---|---|---|---|---|---|---|---|---|
| * Ip: Isoprene unit, Bd: Butadiene unit * P-510: Polyester polyol * The content of the adhesive force adjustor expresses an amount based on 100 parts by mass of the thermoplastic elastomer, and the content of the plasticizer expresses an amount based on 100 parts by mass of polyvinyl butyral. | | | | | | | | |

### (Comparative Example 1)

An interlayer film for laminated glass and a laminated glass were prepared by the same method as in Example 1, except that as the layer B, an ethylene · vinyl acetate copolymer saponified product (EVA saponified product) (manufactured by Tosoh Corporation, MELTHENE H6051) was used in place of the composition of PVB and the polyester polyol, and then subjected to the various physical properties evaluations. The results of the various physical properties evaluations are shown in Table 3.

### (Comparative Example 2)

An interlayer film for laminated glass and a laminated glass were prepared by the same method as in Example 1, except that as the layer A, an ethylene vinyl acetate copolymer (EVA) (manufactured by Tosoh Corporation, ULTRATHENE 635) was used in place of the hydrogenated product of a polystyrene-polyisoprene-polystyrene triblock copolymer, and the adhesive force adjustor was not used, and then subjected to the various physical properties evaluations. The results of the various physical properties evaluations are shown in Table 3.

### (Comparative Example 3)

An interlayer film for laminated glass and a laminated glass were prepared by the same method as in Example 5, except that as the layer A, a composition in which 100 parts by mass of a polyvinyl butyral resin having a viscosity average polymerization degree of about 1,700, an average degree of acetalization of 64 mol%, and an average content of a vinyl acetate unit of 12.5 mol% (hereafter referred to as "PVB-b") was compounded with 60 parts by mass of triethylene glycol-di(2-ethylhexanoate) (hereinafter referred to as "3GO") was used in place of the hydrogenated product of a polystyrene-polyisoprene-polystyrene triblock copolymer and the adhesive force adjustor, and that in the layer B, 60 parts by mass of 3GO was used in place of 15 parts by mass of the polyester polyol, and then subjected to the various physical properties evaluations. The results of the various physical properties evaluations are shown in Table 3.

**[Table 3]**

| | | Comparative Example 1 | Comparative Example 2 | Comparative Example 3 |
|---|---|---|---|---|
| Layer A | Kind | TPE-2 | EVA | PVB-b |
| | Content of polymer block (a) (% by mass) | 20 | - | - |
| | Content of polymer block (b) (% by mass) | 80 | - | - |
| | Mass ratio of monomer of polymer block (b) | Ip=100 | - | - |
| | Sum total of 1,2-bond and 3,4-bond | 55 | - | - |
| | Residual amount of double bond (mol%) | 12.0 | - | - |
| | Peak temperature of tan δ (°C) | -5.2 | -28.1 | 0.7 |
| | Peak height of tan δ | 1.89 | 0.24 | 0.79 |
| | Kind of plasticizer | - | - | 3GO |
| | Content of plasticizer (parts by mass) | - | - | 60 |
| Layer B | Kind | EVA saponified product | PVB-a | PVB-a |
| | Viscosity average polymerization degree | - | 1700 | 1700 |
| | Averaqe degree of acetalization (mol%) | - | 70 | 70 |
| | Kind of plasticizer | - | P-510 | 3GO |
| | Content of plasticizer (parts by mass) | - | 15 | 60 |
| Laminated glass B/A/B | Sum total of thickness of layer A and thickness of layer B | 1/2 | 1/2 | 1/6.5 |
| | Transmittance [at 1,500 nm] (%) | 71 | 72 | 76 |
| | Tertiary resonance frequency (Hz) | 2097 | 1239 | 2024 |
| | Loss factor before moist heat resistance test | 0.43 | 0.17 | 0.34 |
| | Loss factor after moist heat resistance test | 0.40 | 0.11 | 0.27 |
| | Decrease of loss factor | 0.03 | 0.06 | 0.07 |
| | Haze before moist heat resistance test [%] | 2.2 | 1.6 | 0.7 |
| | Haze after moist heat resistance test [%] | 7.2 | 4.7 | 33.3 |
| | Increase of haze | 5.0 | 3.1 | 32.6 |
| | Distance of whitening after moist heat resistance test [mm] | 8 | 7 | 25 |
| | YI before weather resistance test | 1.03 | 1.49 | 1.31 |
| | YI after weather resistance test | 4.21 | 5.22 | 4.71 |
| | Increase of YI | 3.18 | 3.73 | 3.40 |
| | Thermal creep resistance | A | B | A |

| | | | | |
|---|---|---|---|---|
| * Ip: Isoprene unit * P-510: Polyester polyol * 3GO: Triethylene glycol-di-(2-ethylhexanoate) * The content of the plasticizer expresses an amount based on 100 parts by mass of polyvinyl butyral. | | | | |

### REFERENCE SIGNS LIST

1: Layer A
2a: Layer B
2b: Layer B
10: Laminated glass
11: Interlayer film for laminated glass
12: Glass
13: Glass
14: Edge point
20: Xenon lamp
21: Edge point
70: Laminated glass
71: Glass
72: Glass
73: Intermediate glass for laminated glass
80: Laminated glass
81: Iron plate
91: Stand

## Claims

1. An interlayer film for laminated glass comprising a sound insulating layer (layer A) and thermoplastic resin layers containing a thermoplastic resin (layers B), the sound insulating layer (layer A) being located between at least two of the thermoplastic resin layers (layers B), wherein
with respect to a laminated glass obtained by interposing the interlayer film for laminated glass between two sheets of float glass and a laminated glass obtained by holding the laminated glass under conditions at 80°C and at a relative humidity of 95% for 1,000 hours, when a haze of a central portion of the laminated glass in accordance with JIS K 7105 is measured, an increase of the haze of the laminated glass after holding relative to the haze of the laminated glass before holding is 2% or less, and a distance of whitening from an edge side of the laminated glass after holding is 4 mm or less.

2. The interlayer film for laminated glass according to claim 1, wherein with respect to a laminated glass obtained by interposing the interlayer film for laminated glass between two sheets of float glass and a laminated glass obtained by holding the laminated glass under conditions at 80°C and at a relative humidity of 95% for 1,000 hours, when a loss factor at a tertiary resonance frequency is measured at 20°C by a central exciting method, the loss factor of the laminated glass before holding is 0.2 or more, and a decrease of the loss factor of the laminated glass after holding relative to the loss factor of the laminated glass before holding is 0.05 or less.

3. The interlayer film for laminated glass according to claim 1 or 2, wherein
with respect to a laminated glass obtained by interposing the interlayer film for laminated glass between two sheets of float glass,
in a state where the laminated glass is placed such that in a positional relation in which a plane of the laminated glass including the center in a longitudinal direction thereof includes the center in a width direction of a cylindrical xenon lamp, and a plane of the laminated glass including the center in a thickness direction thereof includes the center in a length direction of the cylindrical xenon lamp, its shortest distance to the cylindrical xenon lamp is 29 cm,
when the laminated glass is held for 1,000 hours while irradiating an edge portion thereof with ultraviolet rays at a luminance of the xenon lamp of 180 W/m² under conditions at a relative humidity of 50% and a black panel temperature of 63°C,
in measuring an YI (yellow index) of the laminated glass before holding and an YI of the laminated glass after holding on the basis of JIS K 7373, an increase of the YI of the laminated glass after holding relative to the YI of the laminated glass before holding is 3 or less.

4. The interlayer film for laminated glass according to any of claims 1 to 3, wherein with respect to a laminated glass having the interlayer film for laminated glass interposed by two sheets of float glass, a loss factor at a tertiary resonance frequency as measured at 20°C by a central exciting method is 0.2 or more.

5. The interlayer film for laminated glass according to any of claims 1 to 4, wherein the sound insulating layer (layer A) is a layer containing a thermoplastic elastomer.

6. The interlayer film for laminated glass according to claim 5, wherein the thermoplastic elastomer is a block copolymer.

7. The interlayer film for laminated glass according to claim 6, wherein the block copolymer has an aromatic vinyl polymer block and an aliphatic unsaturated hydrocarbon polymer block.

8. The interlayer film for laminated glass according to any of claims 5 to 7, wherein
the thermoplastic elastomer is a hydrogenated product of a block copolymer having an aromatic vinyl polymer block containing 60 mol% or more of an aromatic vinyl monomer unit and an aliphatic unsaturated hydrocarbon polymer block containing 60 mol% or more of a conjugated diene monomer unit,
the aliphatic unsaturated hydrocarbon polymer block has an isoprene unit and a butadiene unit in an amount of 50 mol% or more in total as the conjugated diene monomer unit, and
a residual amount of a carbon-to-carbon double bond derived from the conjugated diene monomer unit is 2 to 40 mol%.

9. The interlayer film for laminated glass according to any of claims 1 to 8, wherein the thermoplastic resin is a polyvinyl acetal resin or an ionomer resin.

10. The interlayer film for laminated glass according to claim 9, wherein a content of a plasticizer is 50 parts by mass or less based on 100 parts by mass of the polyvinyl acetal resin.

11. The interlayer film for laminated glass according to any of claims 1 to 10, wherein when preparing a laminated glass by interposing the interlayer film for laminated glass between two sheets of float glass, a transmittance of a near infrared light having a wavelength of 1,500 nm is 50% or less.

12. The interlayer film for laminated glass according to any of claims 1 to 11, wherein at least one of the sound insulating layer (layer A) and the thermoplastic resin layers (layers B) contains a heat insulating material.

13. The interlayer film for laminated glass according to any of claims 1 to 12, wherein one or more members selected from the group consisting of tin-doped indium oxide, antimony-doped tin oxide, aluminum-doped zinc oxide, zinc antimonate, lanthanum hexaboride, a metal-doped tungsten oxide, a phthalocyanine compound, and a naphthalocyanine compound are contained as the heat insulating material.

14. A laminated glass comprising the interlayer film for laminated glass according to any of claims 1 to 13 disposed between at least two sheets of glass.
